(19) Europäisches Patentamt
European Patent Office
Office européen des brevets

(11) **EP 3 074 425 B1**

## (12) EUROPEAN PATENT SPECIFICATION

(45) Date of publication and mention
of the grant of the patent:
**02.09.2020 Bulletin 2020/36**

(21) Application number: **14761433.3**

(22) Date of filing: **23.07.2014**

(51) Int Cl.:
*C08B 11/193* ^(2006.01)          *C08B 11/20* ^(2006.01)
*C08L 1/28* ^(2006.01)            *C04B 24/38* ^(2006.01)
*C04B 28/02* ^(2006.01)           *C04B 20/10* ^(2006.01)
*C04B 111/00* ^(2006.01)

(86) International application number:
**PCT/US2014/047808**

(87) International publication number:
**WO 2015/076874 (28.05.2015 Gazette 2015/21)**

(54) **METHOD OF MAKING ALKYL HYDROXYALKYL CELLULOSE ETHERS**

VERFAHREN ZUR HERSTELLUNG VON ALKYL-HYDROXYALKYL-CELLULOSEETHER

PROCÉDÉ DE PRÉPARATION D'ÉTHERS CELLULOSIQUES D'ALKYLHYDROXYALKYLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2013 US 201361908449 P
18.12.2013 US 201361917753 P**

(43) Date of publication of application:
**05.10.2016 Bulletin 2016/40**

(73) Proprietor: **Hercules LLC
Wilmington, DE 19808 (US)**

(72) Inventors:
• **BRUSH, Kelly A.
Newark, DE 19711 (US)**
• **COWAN, Patrick J.
Hockessin, DE 19707 (US)**

• **HOHN, Wilfried Adolf
50374 Erfstadt (DE)**
• **KINDLER, Alexander Adolphe
40878 Ratingen (DE)**
• **NILLES, Vera Louise
53175 Bonn (DE)**

(74) Representative: **Kutzenberger Wolff & Partner
Waidmarkt 11
50676 Köln (DE)**

(56) References cited:
**EP-A1- 1 589 035          EP-A2- 1 166 866
WO-A1-02/094882          CN-A- 101 468 901
JP-B2- 3 727 102          US-A- 2 672 937
US-A- 3 544 556**

**Description**

CROSS REFERENCE TO RELATED APPLICATIONS

The present application claims the benefit under 35 U.S.C. 119 (e) of U.S. Provisional Patent Application Serial No. 61/908,449, filed November 25, 2013 and U.S. Provisional Patent Application Serial No. 61/917, 753, filed on December 18, 2013, and under 35 U.S.C.

BACKGROUND OF THE INVENTION

1. Field of the Disclosed and Claimed Inventive Concepts

The presently disclosed and/or claimed inventive process(es), procedure(s), method(s), product(s), result(s), and/or concept(s) (collectively hereinafter referred to as the "presently disclosed and/or claimed inventive concept(s)") relates generally to methods for the preparation of alkyl hydroxyalkyl cellulose ethers.

2. Background and Applicable Aspects of the Presently Disclosed and Claimed Inventive Concept(s)

Cellulosic ethers (CEs) are a class of water-soluble organic polymers utilized in a variety of technology applications such as building and construction, pharmaceuticals, energy, electronics, the food and beverage industry, surface coatings and paint. CEs provide a variety of desired physical and rheological characteristics. One such example is the ability of CEs to increase the viscosity of aqueous media. Alkyl, hydroxyalkyl, or alkylhydroxyalkyl CEs have been extensively utilized in cement-based applications such as cementitious tile adhesives, tile grouts, etc. The wide-spread usage of alkylhydroxyalkyl CEs in the building and construction industry is in large part due to the unique rheological properties attained with these organic polymers. They improve physical properties such as viscosity, workability, adhesion to substrate, open time, consistency, water-retention, stickiness, and sag resistance.

Processes for preparing CEs are well-known in the art. Alkyl hydroxyalkyl CEs are commonly prepared by reacting an alkylene oxide and an alkyl halogenide at the same time during the etherification stage of the process.

In the synthesis of alkylhydroxyalkyl CEs, the cellulosic anhydroglucose hydroxyls are subjected to alkaline conditions and reacted with etherification agents. The properties and characteristics of the final polymer formed will be determined by the choice of etherification agent(s) as well as the process conditions utilized. When an alkylene oxide/oxirane is reacted with a cellulosic hydroxyl under alkaline conditions, a reactive intermediate is formed. This intermediate can further react with any etherification agents present in the reaction medium. If reaction occurs further with an alkylene oxide/oxirane, oligoether chains can result. If alkyl halogenides or other etherification agents that do not generate a reactive functional group are reacted the resultant ether cannot react further. This is commonly referred to as capping.

It has been found that % unsubstituted anhydroglucose units, enzyme unsubstituted weight %, and blockiness index can be controlled to a great extent by using a modified process for alkylhydroxyalkyl CE synthesis, as described herein. The hydroxyalkyl CEs obtained demonstrate much faster setting times in cement-based systems in comparison to conventional/hitherto existing/standard CEs/ not using the alkyl hydroxyalkyl cellulose ether prepared as described above and result in improved strength values. These CE compositions can be used in cement-based applications to provide rheological advantages such as easy workability and improvements in viscosity, workability, open time, consistency, water-retention, stickiness, and sag resistance while at the same time providing desired setting time and strength profiles.

BRIEF DESCRIPTION OF THE FIGURES

FIG. 1 is a plot showing setting time vs. % blockiness for Control Samples A9-A11 and Samples B1, B2, B10, B15 and B18.
FIG. 2 is a plot showing setting time vs. enzyme unsubstituted weight % for Control Samples A9-A11 and Samples B1, B2, B10, B15 and B18.
FIG. 3 is a plot showing setting time vs. % unsubstituted AGU for Control Samples A9-A11 and Samples B1, B2, B10, B15 and B18.

DETAILED DESCRIPTION OF THE INVENTIVE CONCEPT(S)

In accordance with an embodiment of the presently disclosed and/or claimed inventive concept(s), a method for preparing an alkyl hydroxyalkyl cellulose ether comprises, consists of, or consists essentially of the steps of:

a) mixing an alkaline solution comprising an alkali metal hydroxide with cellulose and an alkyl halogenide at a temperature of at least 10°C, or from 10 to 80°C, or from 10 to 50°C, or from 15 to 30°C, to form a first reaction mixture comprising alkali cellulose, water and the alkyl halogenide;

b) adjusting the temperature of the first reaction mixture to from 50 to 110°C, or from 60 to 110°C, or from 70 to 105°C resulting in the reaction of a portion of the alkyl halogenide with the alkali cellulose forming a second reaction mixture comprising alkyl cellulose ether and unreacted alkyl halogenide, wherein the second reaction mixture is maintained at a temperature in a range of from 50 to 110°C, or from 60 to 110°C, or from 70 to 105°C for 0 to 60 minutes;

c) adding an alkylene oxide to the second reaction mixture from step b) forming a third reaction mixture;

d) adjusting a temperature of the third reaction mixture to be in a range of from 60 to 110°C and reacting at least a portion of the alkyl cellulose ether with: i) at least a portion of the alkylene oxide, and ii) at least a portion of the unreacted alkyl halogenide, thereby forming a fourth reaction mixture comprising an alkyl hydroxyalkyl cellulose ether having a methyl degree of substitution (D.S.) value of from 1.40 to 2.10 or from 1.55 to 2.05 or from 1.61 to 2.00; and a hydroxyethyl molar substitution (M.S.) value of from 0.05 to 0.40 or from 0.05 to 0.35 or from 0.05 to 0.27; and

e) recovering the alkyl hydroxyalkyl cellulose ether from the fourth reaction mixture.

In accordance with an embodiment, the method does not include any further alkalizing following the addition of the alkylene oxide in step c).

The alkali metal hydroxide is present in step a) in an amount of from 3.00 to 5.00, or from 3.20 to 4.75, equivalents per anhydroglucose unit of the cellulose. The alkali metal hydroxide can be any alkali metal hydroxide capable of providing alkalinity. Particularly, the alkali metal hydroxide can comprise sodium hydroxide.

In accordance with an embodiment, the alkyl halogenide useful as an alkylating agent can contain 1-6 carbon atoms, or 1-4 carbon atoms, or 1-3 carbon atoms, or 1-2 carbon atoms. The alkyl group can be branched or straight chain. The halogenide portion of the alkyl halogenide can be selected from the group consisting of bromide, chloride, and combinations thereof. Particularly, the alkyl halogenide can be selected from the group consisting of methyl chloride, ethyl chloride, propyl chloride, and combinations thereof.

In accordance with an embodiment, the alkylene oxide can contain 2-4 carbon atoms. Particularly, the alkylene oxide can be selected from the group consisting of ethylene oxide, propylene oxide, butylene oxide, and combinations thereof.

In accordance with an embodiment, the alkyl halogenide comprises methyl chloride, the alkylene oxide comprises ethylene oxide, and the fourth reaction mixture comprises methyl hydroxyethyl cellulose ether.

In accordance with an embodiment, the first reaction mixture can be raised to and held at a temperature between 70 to 110°C for a period of time ranging from greater than 0 to 60 minutes in step b) resulting in the formation of the second reaction mixture. Further, the third reaction mixture can be held at the temperature between 80 to 110°C for a period of time ranging from greater than 0 to 120 minutes in step d) resulting in the formation of the fourth reaction mixture.

In accordance with an embodiment, the second reaction mixture can be cooled to a temperature from 25 to 80°C prior to the addition of the alkylene oxide in step c) resulting in the formation of the third reaction mixture.

In accordance with an embodiment, the first reaction mixture can be raised to and held at a temperature from 50 to 70°C, or from 60 to 70°C, for a period of time ranging from greater than 0 to 60 minutes in step b) resulting in the formation of the second reaction mixture.

In accordance with an embodiment, the third reaction mixture can be held at the temperature from 80 to 1 10°C for a period of time ranging from 10 to 60 minutes in step d) resulting in the formation of the fourth reaction mixture.

In accordance with an embodiment, the first reaction mixture is raised to and held at a temperature from 50 to 70°C, or from 60 to 70°C, for a period of time ranging from greater than 0 to 30 minutes resulting in the formation of the second reaction mixture.

In accordance with an embodiment, the first, second, third and fourth reaction mixtures can each further comprise a diluent.

In accordance with an embodiment of the presently disclosed and/or claimed inventive concept(s), the method is performed in either a slurry process or a high solids process.

In accordance with an embodiment, the method can be performed as a slurry process containing from 6.0 to 8.5 wt% solids or as a high solids process containing from 15.5 to 19.0 wt% solids. When the method is performed as a slurry process, the diluent can be, but is not limited to, heptanes, toluene, isopropanol or the like. When the method is performed as a high solids process, the diluent comprises dimethyl ether.

In general, cellulose ethers can be added to a mortar to reduce water loss due to evaporation and absorption of the substrate. Cellulose ethers provide water retention, thus water loss is strongly diminished but not completely prevented. Constant workability, acceptable correction and open time, less crack formation, and especially proper strength development are also provided.

**EXAMPLES**

**Preparation of Dry Tile Cement Mortars and Testing**

A dry tile cement mortar formulation was prepared based on the component amounts shown in Table 1 below.

**TABLE 1**

| Composition | Wt% |
|---|---|
| Portland cement CEM I 52.5R | 35 |
| Fine silica sand F35 | 64.6 |
| Methylhydroxyethyl cellulose ether prepared in Examples below | 0.4 |

500 g of the dry tile cement mortar formulation was added to a certain amount of water within 15 seconds to form a sample. The amount of water added was determined based on comparable (480,000 to 520,000 mPas) Helipath viscosity. The sample was mixed for about 30 seconds with a hand mixer (Braun multimix 300Watt) on speed number 1 and 2 kneaders. Then, the sample was mixed furthermore for 45 seconds on speed number 2 to form a tile cement mortar sample. The tile cement mortar sample was allowed to rest for about 5 minutes. The tile cement mortar sample was remixed for 15 seconds on speed number 1 with hand mixer. After mixing, the Helipath viscosity of the mortar was determined and the tile cement mortar was filled into a form of the ultra sonic device for determination of the setting time. Directly after that, the residual tile cement mortar was applied on the concrete slab for later determination of the tensile strength after storage in a climate chamber.

**Testing Methods for Tile Cement Mortars**

Setting time was determined via measurement of ultrasonic wave velocity through the sample. The further the hydration proceeded the faster an ultrasonic wave was conducted through the mortar sample. Depending on the cement and mortar formulation the velocity of the ultrasonic wave approached a final value of about 2000 m/s. Setting time was determined for each mortar sample when half of the hydration was completed, thus when a velocity of 1000 m/s was reached.

For the tensile strength tests, the prepared tile cement mortar sample was mixed, applied on a concrete slab and tested in accordance with ISO13007-2. For tensile strength determination, the tile cement mortar sample was applied with a notched trowel (6 x 6 mm) on a concrete slab. After five minutes, four 5x5 cm stoneware tiles were embedded by loading with a 2 kg weight for 30 seconds. The concrete slab with the applied tile cement mortar and embedded tiles were stored in the climate chamber at 23.0°C and 50% relative humidity (r.H.). The tensile strength after storage for 24 hours, and / or 3 days and / or 7 days was determined.

**Preparation, Measurements and Testing of Methylhydroxyethyl Cellulose Ethers**

Example A - High Solids Process, with Venting

Reagent quantities used in the preparation of Control Samples A1-A12 are shown in Table 2 below.

**TABLE 2**

| Control Sample No. | MeCl (g) | EO (g) | Caustic 50% NaOH (g) | 1st DME (g) | 2nd DME (g) | % Solids |
|---|---|---|---|---|---|---|
| A1 | 226.20 | 16.00 | 278.40 | 88.40 | 88.60 | 17.7 |
| A2 | 223.90 | 7.80 | 276.20 | 89.70 | 87.50 | 18.0 |
| A3 | 228.20 | 15.60 | 296.60 | 83.70 | 83.80 | 17.5 |
| A4 | 225.60 | 19.00 | 298.00 | 81.50 | 85.10 | 17.5 |
| A5 | 227.50 | 19.00 | 295.00 | 84.00 | 83.80 | 17.4 |
| A6 | 228.10 | 19.00 | 298.40 | 84.00 | 82.70 | 17.4 |

(continued)

| Control Sample No. | MeCl (g) | EO (g) | Caustic 50% NaOH (g) | 1st DME (g) | 2nd DME (g) | % Solids |
|---|---|---|---|---|---|---|
| A7 | 228.60 | 19.00 | 296.80 | 84.50 | 82.20 | 17.4 |
| A8 | 226.60 | 19.00 | 295.00 | 84.20 | 84.60 | 17.5 |
| A9 | 240.80 | 25.00 | 313.00 | 87.50 | 87.80 | 16.6 |
| A10 | 240.20 | 30.00 | 311.80 | 88.60 | 87.00 | 16.5 |
| A11 | 240.40 | 30.00 | 310.40 | 88.70 | 86.20 | 16.6 |
| A12 | 285.00 | 22.00 | 369.20 | 96.90 | 96.30 | 14.7 |

Preparation of Control Samples A1-A4:

a) A 150 g quantity of ground cellulose was charged to a 2.5 L horizontal high-solids reactor equipped with a horizontally-mounted plow-type agitator. The air was carefully replaced with nitrogen, followed by nitrogen pressurization to 300 psig. Vacuum was applied to the system to provide 28 inches of reduced pressure. The reduced pressure was held for 1 minute. The reactor was then pressurized to 20 psig with nitrogen. Vacuum purging followed by nitrogen pressurization was repeated.

b) Under agitation, with the reactor at 25°C, a first quantity of dimethyl ether (DME) was charged to the reactor over 5 minutes. The pressure in the reactor was approximately 75 psig at the end of the dimethyl ether charge.

c) Methyl chloride (MeCl) was charged to the reactor over 10 minutes. The pressure in the reactor was approximately 77 psig at the end of the methyl chloride charge. A second quantity of dimethyl ether was then charged to the reactor over 5 minutes. The pressure was approximately 80 psig at the end of the dimethyl ether charge. A quantity of 50% aqueous sodium hydroxide (NaOH) was charged to the reactor over 15 minutes. The pressure was approximately 82 psig following the 50% aqueous sodium hydroxide charge.

d) The temperature was raised to 87°C and held at this level for 60 minutes. The pressure was approximately 232 psig at the end of the 87°C hold.

e) The reactor was then cooled to 50°C and vented to 14.7 psig during cooling. The reactor was then pressurized to 65 psig with nitrogen and ethylene oxide (EO) was charged to the reactor. The reactor pressure was approximately 68 psig after the ethylene oxide charge.

f) The temperature was raised to and held at 87°C for 15 minutes. The pressure was approximately 80 psig after reaching 87°C.

g) The reactor was then cooled to at least 30°C. During cooling the reactor was also vented to atmospheric pressure. Vacuum was then applied to provide 28 inches of reduced pressure. The reduced pressure was held for one minute. The reactor was then pressurized to 5 psig with nitrogen. Vacuum purging followed by nitrogen pressurization was repeated 3 times. The reactor was vented to atmospheric pressure and the contents removed. The wet cake was subjected to a series of hot water washes while adjusting to neutral pH. After drying and milling a methylhydroxyethyl cellulose ether was obtained.

Preparation of Control Samples A5 and A9:

Control Samples A5 and A9 were prepared in the same manner as Control Samples A1-A4, except that after raising the temperature of the contents to 87°C in step f), there was no temperature hold prior to the cooling in step g).

Preparation of Control Samples A6 and A7:

Control Samples A6 and A7 were prepared in the same manner as Control Samples A1-A4, except that after raising the temperature of the contents to 87°C in step f), there was no temperature hold prior to the cooling in step g); and the cooling temperature in step e) was to 60°C. Also, for Control Sample A7, the hold period in step d) was only 30 minutes.

Preparation of Control Samples A8 and A12:

Control Samples A8 and A12 were prepared in the same manner as Control Samples A1-A4, except that after raising the temperature of the contents to 87°C in step f), there was no temperature hold prior to the cooling in step g); and the cooling temperature in step e) was to 70°C. Also, for Control Sample A12, the temperature in step d) was 95°C.

Preparation of Control Samples A10 and A11:

Control Samples A10 and A11 were prepared in the same manner as Control Samples A1-A4, except that after raising the temperature of the contents to 87°C in step f), there was no temperature hold prior to the cooling in step g). Also, the temperature in step d) was 91°C for Control Sample A10 and 95°C for Control Sample A11.

**Sample Measurements:**

Each of the obtained methylhydroxyethyl cellulose ethers A1 - A12 was subjected to testing for: % unsubstituted AGU, methyl DS, hydroxyethyl MS, enzyme unsubstituted wt%, and % blockiness.

**NMR Method:**

Samples were acid hydrolyzed prior to NMR measurement.
Sample hydrolysis: 25 mg of sample was initially swelled in 0.75 gm of $D_2O$. To the swelled sample, 1.5 gm 3M trifluoroacetic acid (TFA) in $D_2O$ was added. The solution vial was maintained at 100 °C for 5 hours. Sample vial was cooled for 15 minutes before 0.3 gm of $D_2SO_4$ was added. Sample solution was maintained at 100°C for one additional hour. The sample solution was allowed to cool down (~30 minutes) and transferred to 5 mm NMR tube for analysis.
NMR Measurement: Quantitative $^1$H NMR spectrum was recorded using Bruker 400 MHz NMR spectrometer. Acquisition parameters were as follows: temperature 300K, sweep width 20 ppm, pulse width 45 deg, number of scans 128, relaxation delay 30s. Processing parameters were as follows: line broadening 0.3 Hz.
Spectrum was phase and baseline corrected using standard practice. Center of the most down-field doublet in the anomeric region (4.32-5.43 ppm) was referenced to 5.231 ppm. The spectrum was integrated as follows:

Region A ($I_A$) = 4.32-5.43 ppm (integral area was calibrated to a value of 1.0, other integral areas were relative to this integral value);
Region B ($I_B$) = 2.70-4.32 ppm;
Region C ($I_C$) = 2.865-2.95 ppm;
Region D ($I_D$) = 4.92-5.32 ppm; and
Region E ($I_E$) = 5.00-5.028 ppm.

DS/MS and % unsubstituted anhydroglucose (% unsub AGU) were calculated as follows:

$$\text{HE MS} = I_C * k \text{ (where k is 6.6489, empirical scaling factor);}$$

$$\text{Methyl DS} = (I_B - (\text{HE MS}) - (I_A * 6));$$

and

$$\% \text{ unsub AGU} = (I_E / I_D) * \text{Methyl DS} * 100.$$

**Enzymatic hydrolysis**

Enzymatic hydrolysis was performed in the presence of a phosphate buffer at pH 6.0 (0.1 M). The sample was weighed (500 mg), accurate to 1 mg. The sample was dissolved in 50 ml phosphate buffer until completely dissolved. 35U of *endo* $\beta$-glucanase (EC 3.2.2.4) (*Bacillus amyloliquifaciens*) from Megazyme (Bray, Ireland) were added to the sample solution. The hydrolysis was carried out in a shaker at 40°C for 24 hours. Released unsubstituted glucose wt% by enzyme was detected with a high performance anion exchange chromatography with pulsed amperometric detection (HPAEC-PAD) from Dionex (Sunnyvale, CA).

**Acid hydrolysis**

Acid hydrolysis was performed on the samples using sulfuric acid. The sample was weighed (250mg), accurate to 1mg, then swollen in 72 % sulfuric acid until completely dissolved. The solution was diluted with water to 2M sulfuric acid. The solution was refluxed for 5 hours. The hydrolyzed solution was diluted to 100 ml volume flask. Released unsubstituted glucose wt% by acid was detected with a high performance anion exchange chromatography with pulsed amperometric detection system (HPAEC-PAD) from Dionex (Sunnyvale, CA). The HPAE-PAD system included a Caropac SA-10 guard, an analytical column, and an electrochemical detector.

**Blockiness Index**

Blockiness Index is equal to:

$$100*(\text{Unsubstituted glucose (wt\%) release by enzyme/ Unsubstituted glucose (wt\%) release by acid})$$

Control Samples A9 - A12 were used in the preparation of tile cement mortar samples (as described above). The resulting tile cement mortars were subjected to at least some of the testing methods described above. The results of all of such testing are shown in Table 3 below.

**TABLE 3**

| Control Sample No. | % Unsub AGU | Methyl DS | HE MS | Enzyme Unsub wt% | % Blockiness | Setting Time Average (h) | 24-Hour Tensile Strength (Average) N/mm² | 7 Day Tensile Strength (N/mm²) | 3 Day Tensile Strength (N/mm²) |
|---|---|---|---|---|---|---|---|---|---|
| A9 | 12.73 | 1.68 | 0.07 | 0.229 | 2.75 | 13.4 | 0.5 | 1.0 | 1.0 |
| A10 | 12.13 | 1.73 | 0.07 | 0.221 | 3.01 | 12.1 | 0.7 | 0.9 | 0.95 |
| A11 | 11.05 | 1.70 | 0.07 | 0.294 | 4.36 | 11.3 | 0.7 | 0.9 | 1.0 |
| A12 | 9.67 | 1.77 | 0.06 | 0.303 | 4.35 | 9.0 | 0.6 | -- | -- |

Example B (Samples B1-B20) -High Solids Process, No Venting

Reagent quantities used in the preparation of Samples B1-B20 are shown in Table 4 below.

**TABLE 4**

| Sample No. | MeCl (g) | EO (g) | 1st Caustic Charge 50% NaOH (g) | 2nd Caustic Charge 50% NaOH (g) | 1st DME (g) | 2nd DME (g) | % Solids |
|---|---|---|---|---|---|---|---|
| B1 | 228.10 | 9.00 | 285.00 | 0.00 | 84.50 | 82.80 | 17.9 |
| B2 | 227.10 | 16.10 | 283.00 | 0.00 | 82.10 | 82.10 | 17.8 |
| B3 | 229.20 | 16.00 | 286.60 | 0.00 | 83.80 | 83.40 | 17.7 |
| B4 | 228.10 | 16.80 | 283.40 | 0.00 | 82.10 | 82.50 | 17.8 |
| B5 | 228.70 | 16.00 | 277.00 | 0.00 | 85.70 | 84.50 | 17.8 |
| B6 | 226.70 | 16.00 | 281.20 | 0.00 | 83.10 | 83.50 | 17.8 |
| B7 | 227.70 | 9.00 | 280.00 | 0.00 | 83.50 | 82.50 | 18.0 |
| B8 | 229.60 | 16.00 | 286.00 | 0.00 | 86.30 | 83.50 | 17.6 |
| B9 | 228.40 | 16.00 | 280.60 | 0.00 | 83.90 | 82.30 | 17.8 |
| B10 | 225.90 | 8.10 | 200.80 | 80.40 | 86.90 | 87.80 | 17.9 |
| B11 | 222.30 | 8.10 | 203.20 | 75.20 | 87.60 | 87.90 | 18.0 |
| B12 | 223.30 | 16.00 | 202.40 | 75.20 | 86.50 | 89.30 | 17.8 |
| B13 | 224.20 | 12.10 | 214.00 | 75.80 | 87.90 | 88.60 | 17.6 |
| B14 | 225.80 | 15.70 | 206.40 | 74.80 | 87.90 | 89.70 | 17.6 |
| B15 | 222.30 | 8.00 | 277.40 | 0.00 | 86.30 | 89.70 | 18.0 |
| B16 | 223.00 | 16.00 | 279.80 | 0.00 | 89.60 | 88.60 | 17.7 |
| B17 | 222.20 | 16.10 | 276.80 | 0.00 | 86.70 | 91.30 | 17.8 |
| B18 | 222.00 | 8.00 | 276.60 | 0.00 | 88.20 | 86.80 | 18.0 |
| B19 | 229.40 | 16.10 | 284.40 | 0.00 | 83.40 | 85.90 | 17.7 |
| B20 | 228.10 | 16.10 | 280.60 | 0.00 | 84.50 | 84.60 | 17.8 |

Preparation of Samples B1-B2. B6-B9 and B19-B20:

a) A 150 g quantity of ground cellulose was charged to a 2.5 L horizontal high-solids reactor equipped with a horizontally-mounted plow-type agitator. The air was carefully replaced with nitrogen, followed by nitrogen pressurization to 300 psig. Vacuum was applied to the system to provide 28 inches of reduced pressure. The reduced pressure was held for 1 minute. The reactor was then pressurized to 20 psig with nitrogen. Vacuum purging followed by nitrogen pressurization was repeated.

b) Under agitation, with the reactor at 25°C, a first quantity of dimethyl ether was charged to the reactor over 5 minutes. The pressure in the reactor was approximately 70 psig at the end of the dimethyl ether charge.

c) Next, methyl chloride was charged to the reactor over 10 minutes. The pressure in the reactor was approximately 73 psig at the end of the methyl chloride charge. Next, a second quantity of dimethyl ether was charged to the reactor over 5 minutes. The pressure was approximately 78 psig at the end of the dimethyl ether charge. A quantity of 50% aqueous sodium hydroxide was charged to the reactor over 15 minutes. The pressure was approximately 80 psig following the 50% aqueous sodium hydroxide charge.

d) The temperature was raised to 95°C and maintained at this level for 20 minutes. The pressure was approximately 267 psig at the end of the 95°C hold.

e) The reactor was cooled to at least 30°C. Ethylene oxide was then charged to the reactor. The reactor pressure was approximately 93 psig after the ethylene oxide charge.

f) The temperature was raised to 95°C and maintained at this level for 30 minutes. The pressure was approximately 270 psig at the end of the 95°C hold.

g) The reactor was cooled to 25°C. During cooling the reactor was also vented to atmospheric pressure. Vacuum was then applied to provide 28 inches of reduced pressure.

The reduced pressure was held for one minute. The reactor was then pressurized to 5 psig with nitrogen. Vacuum purging followed by nitrogen pressurization was repeated 3 times. The reactor was vented to atmospheric pressure and the contents removed. The wet cake was subjected to a series of hot water washes while adjusting to neutral pH. After drying and milling a methylhydroxyethyl cellulose ether was obtained.

Preparation of Sample B3:

Sample B3 was prepared in the same manner as Sample B1, except that after raising the temperature of the contents to 95°C in step d), there was no temperature hold prior to the cooling in step e).

Preparation of Sample B4:

Sample B4 was prepared in the same manner as Sample B1, except that the contents were cooled to 50°C in step e).

Preparation of Sample B5:

Sample B5 was prepared in the same manner as Sample B1, except that the contents were cooled to 70°C in step e).

Preparation of Samples B10 and B12:

a) A 150 g quantity of ground cellulose was charged to a 2.5 L horizontal high-solids reactor equipped with a horizontally-mounted plow-type agitator. The air was carefully replaced with nitrogen, followed by nitrogen pressurization to 300 psig. Vacuum was applied to the system to provide 28 inches of reduced pressure. The reduced pressure was held for 1 minute. The reactor was then pressurized to 20 psig with nitrogen. Vacuum purging followed by nitrogen pressurization was repeated.

b) Under agitation, with the reactor at 25°C, a first quantity of dimethyl ether was charged to the reactor over 5 minutes. The pressure in the reactor was approximately 70 psig at the end of the dimethyl ether charge.

c) Next, methyl chloride was charged to the reactor over 10 minutes. The pressure in the reactor was approximately 73 psig at the end of the methyl chloride charge. Next, a second quantity of dimethyl ether was charged to the reactor over 5 minutes. The pressure was approximately 78 psig at the end of the dimethyl ether charge. A first quantity of 50% aqueous sodium hydroxide was charged to the reactor over 15 minutes. The temperature was raised to 85°C. A second quantity of 50% aqueous sodium hydroxide was charged to the reactor. The pressure was approximately 80 psig following the 50% aqueous sodium hydroxide charge.

d) The temperature was raised to 95°C and maintained at this level for 30 minutes. The pressure was approximately 267 psig at the end of the 95°C hold.

e) Ethylene oxide was charged to the reactor. The reactor pressure was approximately 93 psig after the ethylene oxide charge.

f) The temperature was maintained at 95°C for 30 minutes. The pressure was approximately 270 psig at the end of the 95°C hold.

g) The reactor was cooled to 25°C. During cooling the reactor was also vented to atmospheric pressure. Vacuum was then applied to provide 28 inches of reduced pressure.

The reduced pressure was held for one minute. The reactor was then pressurized to 5 psig with nitrogen. Vacuum purging followed by nitrogen pressurization was repeated 3 times.

The reactor was vented to atmospheric pressure and the contents removed. The wet cake was subjected to a series of hot water washes while adjusting to neutral pH. After drying and milling a methylhydroxyethyl cellulose ether was obtained.

Preparation of Samples B11 and B14:

a) A 150 g quantity of ground cellulose was charged to a 2.5 L horizontal high-solids reactor equipped with a horizontally-mounted plow-type agitator. The air was carefully replaced with nitrogen, followed by nitrogen pressurization to 300 psig. Vacuum was applied to the system to provide 28 inches of reduced pressure. The reduced pressure was held for 1 minute. The reactor was then pressurized to 20 psig with nitrogen. Vacuum purging followed by nitrogen pressurization was repeated.

b) Under agitation, with the reactor at 25°C, a first quantity of dimethyl ether was charged to the reactor over 5 minutes. The pressure in the reactor was approximately 70 psig at the end of the dimethyl ether charge.

c) Next, methyl chloride was charged to the reactor over 10 minutes. The pressure in the reactor was approximately 73 psig at the end of the methyl chloride charge. Next, a second quantity of dimethyl ether was charged to the reactor over 5 minutes. The pressure was approximately 78 psig at the end of the dimethyl ether charge. A first quantity of 50% aqueous sodium hydroxide was charged to the reactor over 15 minutes. The temperature was raised to 85°C. A second quantity of 50% aqueous sodium hydroxide was charged to the reactor. The pressure was approximately 80 psig following the 50% aqueous sodium hydroxide charge.

d) The temperature was raised to 95°C and maintained at this level for 30 minutes. The pressure was approximately 267 psig at the end of the 95°C hold.

e) The reactor was cooled to at least 30°C. Ethylene oxide was then charged to the reactor. The reactor pressure was approximately 93 psig after the ethylene oxide charge.

f) The temperature was raised to 95°C and maintained at this level for 30 minutes. The pressure was approximately 270 psig at the end of the 95°C hold.

g) The reactor was cooled to at least 30°C. During cooling the reactor was also vented to atmospheric pressure. Vacuum was then applied to provide 28 inches of reduced pressure.

The reduced pressure was held for one minute. The reactor was then pressurized to 5 psig with nitrogen. Vacuum purging followed by nitrogen pressurization was repeated 3 times.

The reactor was vented to atmospheric pressure and the contents removed. The wet cake was subjected to a series of hot water washes while adjusting to neutral pH. After drying and milling a methylhydroxyethyl cellulose ether was obtained.

Preparation of Sample B13:

Sample B13 was prepared in the same manner as Sample B1, except that the contents were cooled to 60°C in step e) and the hold period in step d) was 30 minutes. Also, following step c), and before step d), the temperature was raised to 85°C and a second quantity of 50% aqueous sodium hydroxide was charged to the reactor over 5 minutes.

Preparation of Samples B15-B16:

Samples B15-B16 were prepared in the same manner as Sample B1, except that the hold period in step d) was 30 minutes.

Preparation of Samples B17-B18:

Samples B17-B18 were prepared in the same manner as Sample B1, except that the hold period in step d) was 30 minutes.

**Sample Measurements:**

Each of the obtained Samples B1 - B20 was subjected to testing for: % unsubstituted AGU, methyl DS, Hydroxyethyl (HE) MS, enzyme unsubstituted wt%, and % blockiness, in the same manner as described in Example A.

The obtained Samples B1 - B20 were used in the preparation of tile cement mortar samples (as described above). The resulting tile cement mortars were subjected to at least some of the physical testing described above. The results of all of such testing are shown in Tables 5 and 6 below.

**Table 5**

| Sample No. | % Unsub AGU | Methyl DS | HE MS | Enzyme Unsub wt% | % Blockiness | Setting Time Average h | 24-Hour Tensile Strength (average) N/mm$^2$ |
|---|---|---|---|---|---|---|---|
| B1 | 7.89 | 1.71 | 0.06 | 0.069 | 1.18 | 8.7 | 0.75 |
| B2 | 8.94 | 1.69 | 0.08 | 0.075 | 1.170 | 8.2 | 0.8 |
| B3 | 9.94 | 1.71 | 0.11 | 0.132 | 1.800 | 10.0 | 0.7 |
| B4 | 9.77 | 1.74 | 0.07 | 0.061 | 0.790 | 10.1 | 0.7 |
| B5 | 9.75 | 1.66 | 0.07 | 0.061 | 0.750 | 9.9 | 0.7 |
| B6 | 9.49 | 1.80 | 0.07 | 0.132 | 2.084 | 10.0 | 0.8 |
| B7 | 8.54 | 1.73 | 0.06 | 0.081 | 1.355 | 9.9 | 0.7 |
| B8 | 8.70 | 1.79 | 0.07 | 0.082 | 1.459 | 10.2 | 0.7 |
| B9 | 9.16 | 1.78 | 0.07 | 0.070 | 0.981 | 10.8 | 0.7 |
| B10 | 9.92 | 1.72 | 0.07 | 0.105 | 1.506 | 9.9 | 0.7 |
| B11 | 9.19 | 1.76 | 0.07 | 0.054 | 0.799 | 8.4 | 0.7 |
| B12 | 10.42 | 1.74 | 0.08 | 0.082 | 1.243 | 10.0 | 0.7 |
| B13 | 8.46 | 1.77 | 0.08 | 0.041 | 0.728 | 9.7 | 0.8 |
| B14 | 8.51 | 1.75 | 0.07 | 0.047 | 0.841 | 9.7 | 0.7 |
| B15 | 10.41 | 1.70 | 0.08 | 0.093 | 1.485 | 9.9 | 0.6 |
| B16 | 9.19 | 1.77 | 0.10 | 0.059 | 1.221 | 9.5 | 0.6 |
| B17 | 10.58 | 1.66 | 0.07 | 0.081 | 1.289 | 10.7 | 0.6 |
| B18 | 10.62 | 1.68 | 0.07 | 0.105 | 1.472 | 10.6 | 0.6 |
| B19 | 9.28 | 1.76 | 0.07 | 0.070 | 1.260 | 9.6 | 0.7 |
| B20 | 9.60 | 1.76 | 0.07 | 0.059 | 0.898 | 10.2 | 0.6 |

**Table 6**

| Sample No. | 3 Day Tensile Strength, N/mm$^2$ | 7 Day Tensile Strength, N/mm$^2$ |
|---|---|---|
| B1 | 1.0 | 0.9 |
| B2 | 1.0 | 1.1 |
| B4 | 0.9 | 0.9 |
| B10 | 1.0 | 1.1 |
| B11 | 0.9 | 0.9 |
| B12 | 0.9 | 0.9 |
| B14 | 0.9 | 0.9 |
| B15 | 1.1 | 1.1 |
| B16 | 1.1 | 1.2 |
| B17 | 1.1 | 1.0 |
| B18 | 1.2 | 1.1 |
| B19 | 0.6 | 0.7 |
| B20 | - | 0.8 |

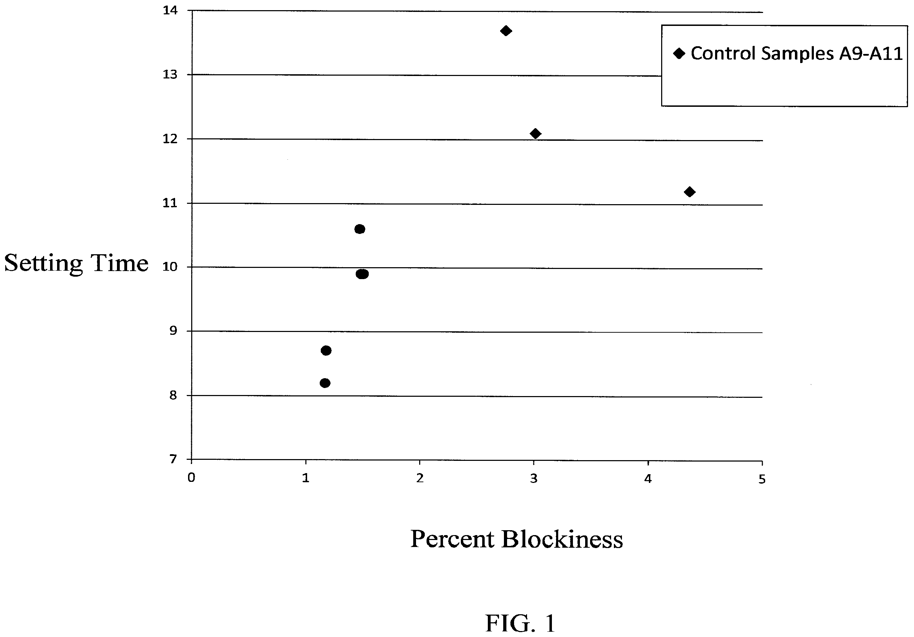

In addition, Figure 1 shows a comparison of setting time vs. % blockiness for Samples B1, B2, B10, B15 and B18 and Control Samples A9-A11. These samples were selected because of their similarity in methyl DS and HE MS. As can be seen in Figure 1, the setting time and % blockiness values are much lower for Samples B1, B2, B10, B15 and B18 as compared to Control Samples A9-A11.

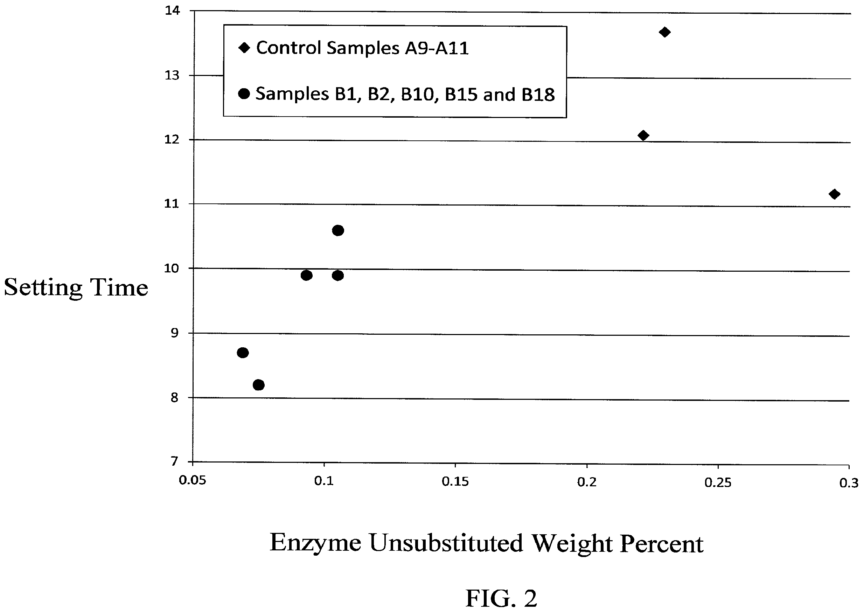

Similarly, Figure 2 shows a comparison of setting time vs. enzyme unsubstituted wt% for Samples B1, B2, B10, B15 and B18 and Control Samples A9-A11. As can be seen in Figure 2, the setting time and enzyme unsubstituted wt% values are much lower for Samples B1, B2, B10, B15 and B18 as compared to Control Samples A9-A11.

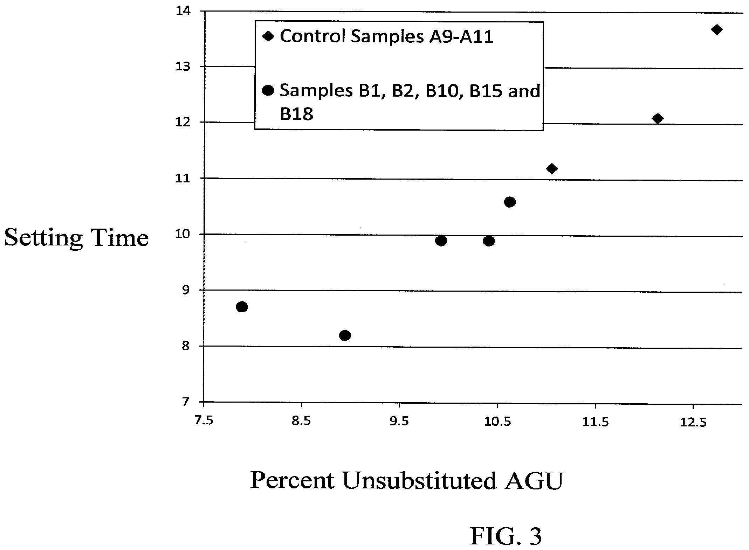

Similarly, Figure 3 shows a comparison of setting time vs. % unsubstituted AGU for Samples B1, B2, B10, B15 and B18 and Control Samples A9-A11. As can be seen in Figure 3, the setting time and % unsubstituted AGU values are much lower for Samples B1, B2, B10, B15 and B18 as compared to Control Samples A9-A11.

Example C (Samples C1-C13) - High Solids Process, No Venting

Reagent quantities used in the preparation of Samples C1-C13 are shown in Table 7 below.

**TABLE 7**

| Sample No. | MeCl (g) | EO (g) | 50% NaOH (g) | 1st DME (g) | 2nd DME (g) | % Solids |
|---|---|---|---|---|---|---|
| C1 | 231.20 | 16.10 | 283.40 | 83.20 | 82.90 | 17.7 |
| C2 | 227.90 | 8.10 | 282.00 | 83.80 | 84.90 | 17.9 |
| C3 | 253.90 | 8.00 | 319.60 | 86.80 | 82.70 | 16.6 |
| C4 | 250.90 | 16.00 | 318.20 | 151.20 | 32.10 | 16.3 |
| C5 | 262.10 | 20.00 | 326.40 | 85.30 | 84.80 | 16.2 |
| C6 | 249.40 | 16.00 | 316.20 | 85.50 | 86.60 | 16.6 |
| C7 | 251.80 | 16.00 | 318.20 | 82.00 | 83.00 | 16.6 |
| C8 | 251.10 | 16.00 | 319.00 | 85.30 | 82.30 | 16.6 |
| C9 | 240.50 | 16.00 | 301.40 | 84.10 | 86.90 | 17.1 |
| C10 | 211.30 | 30.00 | 268.40 | 82.10 | 84.90 | 18.1 |
| C11 | 252.00 | 16.10 | 319.80 | 83.20 | 84.60 | 16.6 |
| C12 | 253.90 | 15.90 | 316.20 | 82.20 | 84.30 | 16.6 |
| C13 | 250.70 | 15.80 | 312.60 | 84.60 | 83.30 | 16.7 |

Preparation of Samples C1-C5:

a) A 150 g quantity of ground cellulose was charged to a 2.5 L horizontal high-solids reactor equipped with a horizontally-mounted plow-type agitator. The air was carefully replaced with nitrogen, followed by nitrogen pressurization to 300 psig. Vacuum was applied to the system to provide 28 inches of reduced pressure. The reduced pressure was held for 1 minute. The reactor was then pressurized to 20 psig with nitrogen. Vacuum purging followed by nitrogen pressurization was repeated.

b) Under agitation, with the reactor at 25°C, a first quantity of dimethyl ether was charged to the reactor over 5 minutes. The pressure in the reactor was approximately 57 psig at the end of the dimethyl ether charge.

c) Next, methyl chloride was charged to the reactor over 10 minutes. The pressure in the reactor was approximately 77 psig at the end of the methyl chloride charge. Next, a second quantity of dimethyl ether was charged to the reactor over 5 minutes. The pressure was approximately 78 psig at the end of the dimethyl ether charge. A quantity of 50% aqueous sodium hydroxide was charged to the reactor over 10 minutes. The pressure was approximately 82 psig following the sodium hydroxide charge.

d) The temperature was raised to 70°C and maintained at this level for 20 minutes (26 minutes for Sample C2). The pressure was approximately 222 psig at the end of the 70°C hold.

e) Ethylene oxide was charged to the reactor. The reactor pressure was approximately 228 psig after the ethylene oxide charge.

f) The temperature was raised to 95°C and maintained at this level for 30 minutes. The pressure was approximately 296 psig at the end of the 95°C hold.

g) The reactor was cooled to 25°C. During cooling the reactor was also vented to atmospheric pressure. Vacuum was then applied to provide 28 inches of reduced pressure.

The reduced pressure was held for one minute. The reactor was then pressurized to 5 psig with nitrogen. Vacuum purging followed by nitrogen pressurization was repeated 3 times. The reactor was vented to atmospheric pressure and the contents removed. The wet cake was subjected to a series of hot water washes while adjusting to neutral pH. After drying and milling a methylhydroxyethyl cellulose ether was obtained.

Preparation of Sample C6:

Sample C6 was prepared in the same manner as Sample C1, except that the hold period in step d) was 10 minutes; and the hold period in step f) was 45 minutes.

Preparation of Sample C7:

Sample C7 was prepared in the same manner as Sample C1, except that the hold period in step d) was 5 minutes; and the hold period in step f) was 50 minutes.

Preparation of Samples C8 and C9:

Samples C8 and C9 were prepared in the same manner as Sample C1, except that there was no hold period in step d); and the hold period in step f) was 55 minutes.

Preparation of Samples C10 and C11:

Samples C10 and C11 were prepared in the same manner as Sample C1, except that the temperature in step d) was 65°C; there was no hold period in step d); and the hold period in step f) was 55 minutes.

Preparation of Samples C12 and C13:

Samples C12 and C13 were prepared in the same manner as Sample C1, except that the temperature in step d) was 60°C; there was no hold period in step d); and the hold period in step f) was 55 minutes.

**Sample Measurements:**

Each of the obtained Samples C1 - C13 was subjected to testing for: % unsubstituted AGU, methyl DS, HE MS, enzyme unsubstituted wt%, and % blockiness, in the same manner as described in Example A.

The obtained Samples C1 - C13 were used in the preparation of tile cement mortar samples (as described above). The resulting tile cement mortars were subjected to at least some of the physical testing described above. The results of all of such testing are shown in Tables 8 and 9 below.

**TABLE 8**

| Sample No. | % Unsub AGU | Methyl DS | HE MS | Enzyme Unsub wt% | % Blockiness | Setting Time (Average) (h) | 24 Hour Tensile Strength (Average) (N/mm$^2$) |
|---|---|---|---|---|---|---|---|
| **C1** | **11.10** | **1.69** | **0.12** | **0.083** | **0.998** | **11.2** | **0.6** |
| C2 | 11.16 | 1.73 | 0.09 | 0.120 | 1.388 | 11.8 | 0.6 |
| C3 | 10.97 | 1.81 | 0.08 | 0.130 | 1.542 | 11.7 | 0.6 |
| C4 | 9.86 | 1.81 | 0.11 | 0.093 | 1.346 | 10.9 | 0.6 |
| C5 | 9.12 | 1.86 | 0.13 | 0.082 | 1.261 | 9.8 | 0.6 |
| C6 | 9.12 | 1.76 | 0.12 | 0.044 | 1.161 | 9.9 | 0.7 |
| C7 | 8.90 | 1.82 | 0.13 | 0.053 | 1.347 | 10.0 | 0.6 |

(continued)

| Sample No. | % Unsub AGU | Methyl DS | HE MS | Enzyme Unsub wt% | % Blockiness | Setting Time (Average) (h) | 24 Hour Tensile Strength (Average) (N/mm$^2$) |
|---|---|---|---|---|---|---|---|
| C8 | 8.73 | 1.84 | 0.14 | 0.040 | 0.686 | 10.4 | 0.7 |
| C9 | 9.97 | 1.84 | 0.13 | 0.042 | 0.660 | 10.0 | 0.8 |
| C10 | 9.82 | 1.75 | 0.14 | 0.060 | 1.301 | 10.4 | 0.7 |
| C11 | 9.16 | 1.79 | 0.14 | 0.057 | 0.856 | 10.3 | 0.7 |
| C12 | 9.34 | 1.82 | 0.15 | 0.088 | 1.422 | 10.7 | 0.77 |
| C13 | 9.67 | 1.77 | 0.15 | 0.084 | 1.366 | 10.4 | 0.8 |

TABLE 9

| Sample No. | 3 Day Tensile Strength, N/mm$^2$ | 7 Day Tensile Strength, N/mm$^2$ |
|---|---|---|
| C5 | 1.0 | 1.0 |
| C6 | 1.0 | 1.0 |
| C7 | 1.2 | 1.0 |
| C8 | 1.0 | 1.1 |
| C9 | 1.1 | 0.9 |
| C10 | 0.9 | 1.0 |
| C11 | 0.9 | 1.1 |
| C12 | 1.1 | 1.1 |
| C13 | 1.1 | 1.0 |

Example D (Samples D1-D16) -Slurry Process, No Venting, 70°C Alkylation

Reagent quantities used in the preparation of Samples D1-D16 are shown in Table 10 below.

TABLE 10

| Sample No. | Cellulose (g) | MeCl (g) | EO (g) | 50% NAOH (g) | Heptane (g) | % Solids |
|---|---|---|---|---|---|---|
| D1 | 73.50 | 78.00 | 13.90 | 131.80 | 659 | 7.7 |
| D2 | 73.50 | 77.40 | 13.20 | 131.70 | 659 | 7.7 |
| D3 | 73.59 | 82.10 | 14.60 | 139.60 | 659 | 7.6 |
| D4 | 73.54 | 81.90 | 27.40 | 139.50 | 660 | 7.5 |
| D5 | 73.50 | 77.60 | 13.10 | 131.80 | 659 | 7.7 |
| D6 | 73.51 | 77.60 | 13.10 | 132.00 | 659 | 7.7 |
| D7 | 73.53 | 81.40 | 19.40 | 139.44 | 659 | 7.6 |
| D8 | 73.54 | 82.20 | 13.20 | 139.60 | 659 | 7.6 |
| D9 | 73.54 | 81.90 | 27.30 | 139.40 | 659 | 7.5 |
| D10 | 73.55 | 82.30 | 19.90 | 139.10 | 659 | 7.6 |
| D11 | 73.54 | 77.40 | 13.90 | 131.90 | 659 | 7.7 |
| D12 | 73.54 | 77.80 | 12.90 | 131.90 | 659 | 7.7 |
| D13 | 73.56 | 77.60 | 14.40 | 131.60 | 659 | 7.7 |

(continued)

| Sample No. | Cellulose (g) | MeCl (g) | EO (g) | 50% NAOH (g) | Heptane (g) | % Solids |
|---|---|---|---|---|---|---|
| D14 | 73.50 | 82.70 | 14.60 | 140.70 | 659 | 7.6 |
| D15 | 73.50 | 83.20 | 14.50 | 140.60 | 659 | 7.6 |
| D16 | 73.50 | 82.50 | 13.90 | 140.40 | 659 | 7.6 |

Preparation of Samples D1-D16:

a) A slurry containing ground cellulose pulp and heptane was charged to a 1.5 L vertical reactor. The air was carefully replaced by nitrogen followed by nitrogen pressurization to 105 psig. Vacuum was applied to the system to provide 28 inches of reduced pressure. The reduced pressure was maintained for 1minute. Pressurization followed by vacuum purging was repeated. The reactor was then pressurized to 15 psig with nitrogen.

b) Under agitation, a quantity of 50% aqueous sodium hydroxide was charged to the reactor at 18°C over 13 minutes. Vacuum was applied to the system to provide 28 inches of reduced pressure. The reduced pressure was maintained for 1minute. The reactor was pressurized to 15 psig with nitrogen. Vacuum purging followed by pressurization to 15 psig was repeated four more times.

c) Methyl chloride was then charged over 20 minutes. The pressure in the reactor was approximately 25 psig following the methyl chloride addition.

d) The temperature was raised to 70°C and maintained at this level for 1 hour. The pressure was approximately 54 psig at the end of the 70°C hold.

e) The temperature was then reduced to 40°C. The pressure in the reactor was approximately 27 psig. Ethylene oxide was then charged over 4.7 minutes. The pressure after the EO addition was approximately 42 psig.

f) The temperature was raised to 60°C and maintained at this level for 30 minutes. The temperature was then raised to 105°C. The pressure was 75 psig. The temperature was maintained at 105°C for 2 hours.

g) The reactor was cooled to 40°C. The pressure in the reactor was 25 psig. The content of the reactor was filtered and the wet cake was subjected to a series of hot water washes while adjusting to neutral pH. After drying and milling a methylhydroxyethyl cellulose ether was obtained.

**Sample Measurements:**

Each of the obtained Samples D1 - D16 was subjected to testing for: % unsubstituted AGU, methyl DS, and HE MS, in the same manner as described in Example A.

The obtained Samples D1 - D16 were used in the preparation of tile cement mortar samples (as described above). The resulting tile cement mortars were subjected to at least some of the physical testing described above. The results of all of such testing are shown in Table 11 below.

**TABLE 11**

| Sample No. | % Unsub AGU | Methyl DS | HE MS | Enzyme Unsub % wt | % Blockiness | Setting Time Average (h) | 24-Hour Tensile Strength (Average) (N/mm$^2$) |
|---|---|---|---|---|---|---|---|
| D1 | 9.08 | 1.79 | 0.18 | 0.081 | 1.190 | 8.9 | 0.68 |
| D2 | 11.62 | 1.72 | 0.17 | 0.067 | 1.022 | 11.0 | 0.65 |
| D3 | 9.59 | 1.76 | 0.19 | 0.068 | 0.945 | 9.2 | 0.70 |
| D4 | 9.96 | 1.94 | 0.26 | 0.028 | 0.631 | 9.0 | 0.60 |
| D5 | 13.01 | 1.71 | 0.21 | 0.084 | 1.060 | 15.3 | 0.60 |
| D6 | 9.69 | 1.76 | 0.18 | 0.033 | 0.597 | 9.8 | 0.60 |
| D7 | 10.24 | 1.86 | 0.20 | 0.072 | 2.520 | 10.5 | 0.60 |
| D8 | 10.49 | 1.82 | 0.19 | 0.103 | 1.302 | 9.8 | 0.70 |

(continued)

| Sample No. | % Unsub AGU | Methyl DS | HE MS | Enzyme Unsub % wt | % Blockiness | Setting Time Average (h) | 24-Hour Tensile Strength (Average) (N/mm$^2$) |
|---|---|---|---|---|---|---|---|
| D9 | 10.15 | 1.87 | 0.24 | 0.076 | 1.974 | 10.2 | 0.60 |
| D10 | 9.83 | 1.80 | 0.20 | 0.046 | 0.953 | 9.2 | 0.70 |
| D11 | 9.25 | 1.83 | 0.16 | 0.060 | 2.120 | 8.3 | 0.60 |
| D12 | 10.36 | 1.81 | 0.17 | 0.042 | 0.766 | 10.3 | 0.60 |
| D13 | 11.48 | 1.82 | 0.20 | 0.059 | 0.925 | 11.1 | 0.60 |
| D14 | 9.07 | 1.87 | 0.18 | 0.045 | 1.111 | 11.5 | 0.60 |
| D15 | 8.99 | 1.75 | 0.16 | 0.028 | 0.591 | 13.4 | 0.60 |
| D16 | 9.71 | 1.75 | 0.17 | 0.072 | 1.546 | 10.4 | 0.60 |

Example E (Samples E1-E2) -Slurry Process, No Venting, 87°C Alkylation

Reagent quantities used in the preparation of Samples E1-E2 are shown in Table 12 below.

**TABLE 12**

| Sample No. | Cellulose (g) | MeCl (g) | EO (g) | 50% NaOH (g) | Heptane (g) | % Solids |
|---|---|---|---|---|---|---|
| E1 | 73.54 | 77.40 | 14.60 | 131.40 | 659 | 7.7 |
| E2 | 73.56 | 76.70 | 13.00 | 132.00 | 659 | 7.7 |

Preparation of Samples E1 and E2:

a) A slurry containing ground cellulose pulp and heptane were charged to a 1.5 L vertical reactor. The air was carefully replaced by nitrogen followed by nitrogen pressurization to 105 psig. Vacuum was applied to the system to provide 28 inches of reduced pressure. The reduced pressure was maintained for 1minute. Pressurization followed by vacuum purging was repeated. The reactor was then pressurized to 15 psig with nitrogen.
b) Under agitation, a quantity of 50% aqueous sodium hydroxide was charged to the reactor at 18°C over 13 minutes. Vacuum was applied to the system to provide 28 inches of reduced pressure. The reduced pressure was maintained for 1minute. The reactor was pressurized to 15 psig with nitrogen. Vacuum purging followed by pressurization to 15 psig was repeated four more times.
c) Methyl chloride was then charged over 20 minutes. The pressure in the reactor was approximately 25 psig following the methyl chloride addition.
d) The temperature was raised to 87°C and maintained at this level for 1 hour. The pressure was approximately 54 psig at the end of the 87°C hold.
e) The temperature was then reduced to 40°C. The pressure in the reactor was approximately 27 psig. Ethylene oxide was then charged over 4.7 minutes. The pressure after the EO addition was approximately 42 psig.
f) The temperature was raised to 60°C and maintained at this level for 30 minutes. The temperature was then raised to 105°C. The pressure was 75 psig. The temperature was maintained at 105°C for 2 hours.
g) The reactor was cooled to 40°C. The pressure in the reactor was 25 psig. The content of the reactor was filtered and the wet cake was subjected to a series of hot water washes while adjusting to neutral pH. After drying and milling, a methylhydroxyethyl cellulose ether was obtained.

**Sample Measurements:**

Each of the obtained Samples E1 - E2 was subjected to testing for: % unsubstituted AGU, methyl DS, and HE MS, in the same manner as described in Example A.
The obtained Samples E1 - E2 were used in the preparation of tile cement mortar samples (as described above). The resulting tile cement mortars were subjected to at least some of the physical testing described above. The results of all of such testing are shown in Table 13 below.

**TABLE 13**

| Sample No. | % Unsub AGU | Methyl DS | HE MS | Enzyme Unsub % wt | % Blockiness | Setting Time Average (h) | 24-Hour Tensile Strength (Average) ( N/mm$^2$) |
|---|---|---|---|---|---|---|---|
| E1 | 11.42 | 1.74 | 0.11 | 0.058 | 1.021 | 11.7 | 0.60 |
| E2 | 11.15 | 1.72 | 0.12 | 0.066 | 1.083 | 13.4 | 0.70 |

Example F (Samples F1-F19) -Slurry Process, No Venting, 105°C Alkylation

Reagent quantities used in the preparation of Samples F1-F19 are shown in Table 14 below.

**TABLE 14**

| Sample No. | Cellulose (g) | MeCl (g) | EO (g) | 50% NaOH (g) | Heptane (g) | % Solids |
|---|---|---|---|---|---|---|
| F1 | 73.54 | 77.50 | 13.40 | 132.00 | 659 | 7.7 |
| F2 | 73.55 | 77.70 | 13.20 | 132.00 | 659 | 7.7 |
| F3 | 73.53 | 68.80 | 9.80 | 117.20 | 659 | 7.9 |
| F4 | 73.51 | 69.70 | 11.10 | 117.30 | 659 | 7.9 |
| F5 | 73.51 | 69.40 | 10.40 | 117.00 | 659 | 7.9 |
| F6 | 73.51 | 61.80 | 6.90 | 104.70 | 659 | 8.1 |
| F7 | 73.52 | 61.70 | 6.70 | 104.40 | 659 | 8.1 |
| F8 | 73.56 | 90.60 | 13.40 | 153.40 | 659 | 7.4 |
| F9 | 73.50 | 99.70 | 13.40 | 172.20 | 659 | 7.2 |
| F10 | 73.52 | 95.30 | 13.00 | 164.30 | 659 | 7.3 |
| F11 | 73.51 | 95.10 | 8.50 | 162.70 | 659 | 7.4 |
| F12 | 73.50 | 91.10 | 5.90 | 153.30 | 659 | 7.5 |
| F13 | 73.52 | 99.30 | 6.80 | 170.90 | 659 | 7.3 |
| F14 | 73.50 | 100.10 | 9.50 | 171.80 | 659 | 7.2 |
| F15 | 73.50 | 100.50 | 9.00 | 170.30 | 659 | 7.3 |
| F16 | 73.51 | 100.00 | 13.20 | 171.20 | 659 | 7.2 |
| F17 | 73.50 | 100.20 | 13.20 | 170.20 | 659 | 7.2 |
| F18 | 73.50 | 100.10 | 13.30 | 171.40 | 659 | 7.2 |
| F19 | 73.51 | 99.60 | 13.20 | 170.90 | 659 | 7.2 |

Preparation of Samples F1-F19:

a) A slurry containing ground cellulose pulp and heptane was charged to a 1.5 L vertical reactor. The air was carefully replaced by nitrogen followed by nitrogen pressurization to 105 psig. Vacuum was applied to the system to provide 28 inches of reduced pressure. The reduced pressure was maintained for 1 minute. Pressurization followed by vacuum purging was repeated. The reactor was then pressurized to 15 psig with nitrogen.

b) Under agitation, a quantity of 50% aqueous sodium hydroxide was charged to the reactor at 20°C over 12 minutes. Vacuum was applied to the system to provide 28 inches of reduced pressure. The reduced pressure was maintained for 1minute. The reactor was pressurized to 15 psig with nitrogen. Vacuum purging followed by pressurization to 15 psig was repeated four more times.

c) Methyl chloride was then charged over 18 minutes. The pressure in the reactor was approximately 31 psig following the methyl chloride addition.

d) The temperature was raised to 105°C and maintained at this level for 1 hour. The pressure was approximately 75 psig at the end of the 105°C hold.

e) The temperature was then reduced to 40°C. The pressure was approximately 27 psig. Ethylene oxide was then charged over 4.0 minutes. The pressure after the EO addition was approximately 30 psig.

f) The temperature was raised to 60°C and maintained at this level for 30 minutes. The pressure was approximately 40 psig. The temperature was raised to 105°C. The pressure was 72 psig. The temperature was maintained at 105°C for 2 hours.

g) The reactor was cooled to 40°C. The content of the reactor was filtered and the wet cake was subjected to a series of hot water washes while adjusting to neutral pH. After drying and milling a methylhydroxyethyl cellulose ether was obtained.

**Sample Measurements:**

Each of the obtained Samples F1 - F19 was subjected to testing for: % unsubstituted AGU, methyl DS, and HE MS, in the same manner as described in Example A.

The obtained Samples F1 - F19 were used in the preparation of tile cement mortar samples (as described above). The resulting tile cement mortars were subjected to at least some of the physical testing described above. The results of all of such testing are shown in Table 15 below.

**TABLE 15**

| Sample No. | % Unsub AGU | Methyl DS | HE MS | Enzyme Unsub% wt | % Blockiness | Setting Time Average (h) | 24-HourTensile Strength (Average) (N/mm$^2$) |
|---|---|---|---|---|---|---|---|
| F1 | 9.23 | 1.75 | 0.08 | 0.030 | 0.632 | 8.7 | 0.65 |
| F2 | 8.91 | 1.70 | 0.08 | 0.044 | 0.933 | 8.5 | 0.50 |
| F3 | 9.36 | 1.67 | 0.08 | 0.021 | 0.451 | 9.3 | 0.60 |
| F4 | 9.17 | 1.65 | 0.08 | 0.018 | 0.402 | 8.6 | 0.90 |
| F5 | 9.74 | 1.63 | 0.09 | 0.026 | 0.460 | 9.1 | 0.70 |
| F6 | 10.65 | 1.59 | 0.09 | 0.031 | 0.538 | 10.6 | 0.70 |
| F7 | 11.04 | 1.62 | 0.07 | 0.032 | 0.498 | 11.3 | 0.70 |
| F8 | 7.86 | 1.74 | 0.07 | 0.020 | 0.478 | 8.1 | 0.60 |
| F9 | 6.84 | 1.81 | 0.07 | 0.015 | 0.398 | 6.3 | 0.63 |
| F10 | 8.41 | 1.82 | 0.08 | 0.037 | 0.893 | 8.2 | 0.70 |
| F11 | 8.00 | 1.77 | 0.07 | 0.029 | 0.645 | 7.0 | 0.50 |
| F12 | 7.71 | 1.70 | 0.06 | 0.018 | 0.449 | 7.8 | 0.75 |
| F13 | 7.67 | 1.75 | 0.06 | 0.030 | 0.741 | 7.0 | 0.50 |
| F14 | 7.03 | 1.82 | 0.06 | 0.019 | 0.728 | 8.6 | 0.65 |
| F15 | 8.65 | 1.77 | 0.05 | 0.083 | 1.519 | 10.3 | 0.60 |
| F16 | 6.68 | 1.77 | 0.06 | 0.015 | 0.582 | 8.1 | 0.70 |
| F17 | 7.29 | 1.82 | 0.07 | 0.052 | 1.393 | 8.7 | 0.70 |
| F18 | 9.03 | 1.74 | 0.06 | 0.147 | 3.024 | 12.3 | 0.60 |
| F19 | 8.69 | 1.73 | 0.07 | 0.104 | 2.395 | 11.1 | 0.60 |

Example G - Preparation Procedure for Slurry Examples PS1 - PS13

Reagent quantities used in the preparation of Slurry Samples PS1 -PS13 are shown in Table 16 below.

TABLE 16

| Sample No. | Cellulose (g) | Heptane (g) | MeCl (g) | EO (g) | 50% NaOH (g) | % Solids |
|---|---|---|---|---|---|---|
| PS1 | 91.88 | 823.8 | 96.1 | 18.2 | 164.7 | 7.7 |
| PS2 | 91.88 | 823.8 | 132.9 | 17.7 | 228.3 | 7.1 |
| PS3 | 91.88 | 823.8 | 124.8 | 16.3 | 213.5 | 7.2 |
| PS4 | 73.50 | 658.5 | 108.5 | 14.5 | 182.1 | 7.1 |
| PS5 | 91.88 | 823.8 | 124.9 | 16.1 | 214.0 | 7.2 |
| PS6 | 73.50 | 658.5 | 92.0 | 13.7 | 156.8 | 7.4 |
| PS7 | 91.88 | 823.8 | 125.1 | 16.3 | 215.7 | 7.2 |
| PS8 | 73.50 | 658.5 | 107.1 | 14.2 | 179.4 | 7.1 |
| PS9 | 73.50 | 658.5 | 106.9 | 14.5 | 181.5 | 7.1 |
| PS10 | 91.88 | 824.2 | 124.8 | 17.2 | 214.1 | 7.2 |
| PS11 | 73.50 | 658.5 | 106.6 | 14.1 | 181.3 | 7.1 |
| PS12 | 91.88 | 823.8 | 125.00 | 16.6 | 214.0 | 7.2 |
| PS13 | 73.50 | 658.5 | 105.3 | 15.3 | 180.0 | 7.1 |

Preparation of Samples PS1-PS3:

a) A slurry containing ground cellulose pulp and heptane was charged to a vertical reactor. The air was carefully replaced by nitrogen followed by nitrogen pressurization to 105 psig. Vacuum was applied to the system to provide 28 inches of reduced pressure. The reduced pressure was maintained for 1 minute. Pressurization followed by vacuum purging was repeated. The reactor was then pressurized to 15 psig with nitrogen.

b) Under agitation, aqueous 50% sodium hydroxide was charged to the reactor at a temperature above 10°C. Vacuum was applied to the system to provide 28 inches of reduced pressure. The reduced pressure was maintained for 1 minute. The reactor was pressurized to 15 psig with nitrogen. Vacuum purging followed by pressurization to 15 psig was repeated four more times.

c) Methyl chloride was charged to the reactor.

d) The temperature was raised to 87°C.

e) The temperature was reduced to 40°C. Ethylene oxide was charged to the reactor.

f) The temperature was raised to 60°C and maintained at this level for 30 minutes. The temperature was raised to 105°C. The temperature was maintained at 105°C for 2 hours.

g) The reactor was cooled to 40°C. The contents of the reactor were filtered and the wet cake was subjected to a series of hot water washes while adjusting to neutral pH. After drying and milling a methylhydroxyethyl cellulose ether was obtained.

Preparation of Samples PS4-PS6:

Samples PS4-PS6 were prepared in the same manner as Samples PS1-PS3, except that the temperature in step d) was 80°C.

Preparation of Sample PS7:

Sample PS7 was prepared in the same manner as Samples PS1-PS3, except that the temperature in step d) was 70°C.

Preparation of Sample PS8:

Sample PS8 was prepared in the same manner as Samples PS1-PS3, except that the temperature in step d) was 65°C.

Preparation of Samples PS9-PS10:

Samples PS9-PS10 were prepared in the same manner as Sample PS8, except that the temperature in step d) was maintained for 30 minutes.

Preparation of Samples PS11-PS13:

Samples PS11 were prepared in the same manner as Samples PS1-PS3, except that the temperature in step d) was 60°C and maintained at 60°C for 30 minutes. Samples P12-13 were prepared in the same manner as Samples PS1-PS3, except that the temperature in step d) was 60°C.
Samples PS1-PS13 were subjected to testing as described in Example A above. The results of testing are shown in Table 16 below.

Example H - Preparation Procedure for High Solids Examples PD1 - PD6

Reagent quantities used in the preparation of high solids Samples PD1-PD6 are shown in Table 17 below.

TABLE 17

| Sample No. | MeCl (g) | EO (g) | 50% NaOH (g) | Total DME (g) | % Solids |
|---|---|---|---|---|---|
| PD1 | 265.6 | 16.00 | 327.4 | 177.9 | 16.0 |
| PD2 | 260.2 | 16.00 | 325.0 | 176.2 | 16.2 |
| PD3 | 261.3 | 16.00 | 325.6 | 178.6 | 16.1 |
| PD4 | 261.6 | 16.00 | 327.2 | 177.9 | 16.1 |
| PD5 | 251.3 | 16.00 | 317.8 | 174.1 | 16.5 |
| PD6 | 255.6 | 16.00 | 317.8 | 172.0 | 16.5 |

Preparation of Sample PD1:

a) A 150 g quantity of ground cellulose was charged to a 2.5 L horizontal high-solids reactor equipped with a horizontally-mounted plow-type agitator. The air was carefully replaced with nitrogen, followed by nitrogen pressurization to 300 psig. Vacuum was applied to the system to provide 28 inches of reduced pressure. The reduced pressure was held for 1 minute. The reactor was then pressurized to 20 psig with nitrogen. Vacuum purging followed by nitrogen pressurization was repeated.
b) Under agitation, with the reactor at 25°C, dimethyl ether was charged to the reactor over 5 minutes.
c) Next, methyl chloride was charged to the reactor over 10 minutes. Next, additional dimethyl ether was charged to the reactor over 5 minutes. A quantity of 50% aqueous sodium hydroxide was charged to the reactor over 10 minutes.
d) The temperature was raised to 60°C and maintained at this level for 15 minutes.
e) Ethylene oxide was then charged to the reactor.
f) The temperature was raised to 95°C and maintained at this level for 45 minutes.
g) The reactor was cooled to 25°C. During cooling the reactor was also vented to atmospheric pressure. Vacuum was then applied to provide 28 inches of reduced pressure.

The reduced pressure was held for one minute. The reactor was then pressurized to 5 psig with nitrogen. Vacuum purging followed by nitrogen pressurization was repeated 3 times. The reactor was vented to atmospheric pressure and the contents removed. The wet cake was subjected to a series of hot water washes while adjusting to neutral pH. After drying and milling a methylhydroxyethyl cellulose ether was obtained.

Preparation of Sample PD2:

Sample PD2 was prepared in the same manner as Sample PD1, except that the temperature in step d) was maintained for 30 minutes.

Preparation of Sample PD3:

Sample PD3 was prepared in the same manner as Sample PD1, except that the temperature in step d) was 65°C.

Preparation of Sample PD4:

Sample PD4 was prepared in the same manner as Sample PD3, except that the temperature in step d) was maintained for 30 minutes.

Preparation of Sample PD5:

Sample PD5 was prepared in the same manner as Sample PD1, except that the temperature in step d) was 75°C, with no hold in temperature prior to step e); and the temperature in step f) was maintained for 55 minutes.

Preparation of Sample PD6:

Sample PD6 was prepared in the same manner as Sample PD1, except that the temperature in step d) was 80°C, with no hold in temperature prior to step e); and the temperature in step f) was maintained for 55 minutes.
Samples PD1-PD6 were subjected to testing as described in Example A above. The results of all of such testing are shown in Table 18 below.

**TABLE 18**

| Sample No. | % Unsub AGU | Methyl DS | HE MS | Enzyme Unsub % wt | % Blockiness | Setting Time Average (h) | 24-Hour Tensile Strength (Average) (N/mm$^2$) | 7 Day Tensile Strength (N/mm$^2$) | 3 Day Tensile Strength (N/mm$^2$) |
|---|---|---|---|---|---|---|---|---|---|
| PS1 | 11.23 | 1.75 | 0.19 | 0.045 | 0.632 | 11.2 | 0.60 | 1.2 | 1.0 |
| PS2 | 10.08 | 1.78 | 0.17 | 0.128 | 1.824 | 11.9 | 0.60 | 1.1 | 1.1 |
| PS3 | 10.99 | 1.77 | 0.15 | 0.088 | 1.267 | 11.9 | 0.60 | 0.9 | 0.9 |
| PS4 | 6.73 | 1.97 | 0.16 | 0.014 | 0.449 | 8.5 | 0.60 | 1.0 | 1.1 |
| PS5 | 10.22 | 1.78 | 0.18 | 0.087 | 1.378 | 11.6 | 0.60 | 1.1 | 1.0 |
| PS6 | 8.45 | 1.82 | 0.19 | 0.020 | 0.516 | 8.6 | 0.60 | 0.9 | 1.0 |
| PS7 | 10.32 | 1.81 | 0.19 | 0.076 | 1.264 | 11.7 | 0.60 | 1.2 | 0.9 |
| PS8 | 7.01 | 1.86 | 0.18 | 0.017 | 0.525 | 8.8 | 0.60 | 0.9 | 1.2 |
| PS9 | 7.23 | 1.93 | 0.20 | 0.018 | 0.619 | 10.3 | 0.60 | 0.9 | 1.4 |
| PS10 | 12.31 | 1.79 | 0.18 | 0.113 | 1.432 | 12.6 | 0.60 | 1.0 | 1.0 |
| PS11 | 7.51 | 1.86 | 0.13 | 0.031 | 0.886 | 10.3 | 0.60 | 1.1 | 1.1 |
| PS12 | 9.98 | 1.84 | 0.22 | 0.056 | 0.895 | 11.2 | 0.60 | 1.1 | 1.1 |
| PS13 | 7.93 | 1.94 | 0.22 | 0.024 | 0.760 | 9.1 | 0.60 | 1.0 | 1.0 |
| PD1 | 8.76 | 1.83 | 0.14 | 0.064 | 1.237 | 10.6 | 0.60 | 1.1 | 1.0 |
| PD2 | 9.82 | 1.79 | 0.14 | 0.106 | 1.876 | 11.4 | 0.60 | 1.1 | 1.1 |
| PD3 | 9.91 | 1.79 | 0.13 | 0.102 | 1.276 | 10.7 | 0.60 | 1.0 | 1.1 |
| PD4 | 9.90 | 1.77 | 0.12 | 0.086 | 1.362 | 10.9 | 0.60 | 1.0 | 1.1 |
| PD5 | 9.58 | 1.76 | 0.14 | 0.074 | 0.956 | 10.1 | 0.60 | 1.0 | 1.2 |
| PD6 | 9.92 | 1.77 | 0.14 | 0.056 | 0.788 | 9.0 | 0.60 | 0.9 | 1.0 |

Example I

Cementitious tile adhesives were prepared according to the above mentioned procedures comprising 35.0% CEM II A-S 42.5, 0.4% CE, and 64.6% Silica sand (0.1 - 0.35 mm). Three different cellulose ethers were compared. As a benchmark, a commercially available Culminal ™ MHEC 15000PFS (Sample REF, available from Ashland Inc.) was compared to cellulose ether Samples B15 (no venting) and A10 (venting), described above. The same samples were additionally tested including a retarder/accelerator combination shown in Table 19.

For open time determination, the ready mixed mortar was applied with a notched trowel (6 x 6 mm) on a fibre cement plate. Every five minutes 5x5 cm stoneware and earthenware tiles were embedded by loading with a 2 kg weight for 30 seconds. The tile was removed and the backside of the tile was judged. If more than 50 % was covered with cementitious tile adhesive, open time was still ok. Open time was finished if less than 50 % was covered with cementitious tile adhesive.

**TABLE 19**

| Sample | Retarder/Accelerator | Water factor (WF) | Visual Open Time (min) | Setting Time (1000 m/s)(h.) |
|---|---|---|---|---|
| REF | -- | 0.25 | -- | 17.3 |
| REF | +0.15%NaSCN +0.03% Sodium polyphosphate | 0.25 | 55 | 18.0 |
| B15 | -- | 0.26 | -- | 15.3 |
| B15 | +0.15%NaSCN +0.03% Sodium polyphosphate | 0.26 | 65 | 16.0 |
| A10 | -- | 0.26 | | 18.7 |
| A10 | +0.15%NaSCN +0.03% Sodium polyphosphate | 0.26 | 65 | 20.3 |

The results indicate that the measured setting time is decreased in the order: A10 > REF > B15. The difference in the order of setting time is maintained when an accelerator/retarder combination is added to the mortar but shifted to longer times. In comparison to the commercial sample, both A10 and B15 show improved visual open time.

Example J

Another cementitious tile adhesive was prepared from 35.0% CEM I 52.5R; 0.4% CE; and 64.6% Silica sand (0.1 - 0.35 mm). Again the two cellulose ethers, obtained from different processes Samples B15 (no venting) and A10 (venting) were compared in the presence of sodium polyphosphate as a retarder with respect to strength development, setting time and visual open time. Results are shown in Table 20.

**TABLE 20**

| Sample | Retarder | Water factor | Visual Open Time (min) | Setting Time (1000 m/s) (h.) | Tensile strength Dry / wet / warm (N/mm$^2$) |
|---|---|---|---|---|---|
| B15 | +0.03% Sodium polyphosphate | 0.26 | 65 | 15.8 | 1.1 / 1.4 / 1.2 |
| A10 | +0.03% Sodium polyphosphate | 0.26 | 60 | 17.7 | 1.0 / 1.5 / 0.9 |

As can be seen from Table 20 the setting time of sample A10 is approximately two hours longer than the setting time of the Sample B15, resulting in improved strength performance after dry and warm storage for Sample B15 over Sample A10. Thus the difference in setting times between the different cellulose ethers is maintained in the presence of retarders. Visual open time, however, is unexpectedly longer in the case of the faster setting Sample B15.

**Preparation and Testing of Mortars Containing Encapsulated Calcium Chloride**

**Heat Evolution of Different Calcium Chloride Salts**

Depending on the amount of water incorporated in the crystal, calcium chloride salts exhibit heat evolution or cooling activity during dissolution in water.

Table 19 shows the results obtained when adding water to respective salts and monitoring the thermal activities via heat flow calorimetry. The addition of water to anhydrous $CaCl_2$ results in a distinct heat evolution within the first minutes. Compared to that the heat evolution from calcium chloride dihydrate ($CaCl_2 \cdot 2H_2O$) is considerably less pronounced, but still positive. In contrast to that calcium chloride hexahydrate ($CaCl_2 \cdot 6H_2O$) absorbs heat while dissolving and thus results in a cooling of the sample. This demonstrates an important benefit of using anhydrous $CaCl_2$, or $CaCl_2 \cdot 2H_2O$ (or by inference $CaCl_2 \cdot H_2O$ and $CaCl_2 \cdot 4H_2O$), in mortar formulations where heat addition is needed.

**TABLE 21**

| $CaCl_2$ Salt | Initial peak heat evolution (mW/g) |
|---|---|
| Anhydrous $CaCl_2$ | +1450 |
| $CaCl_2 \cdot 2H_2O$ | +500 |
| $CaCl_2 \cdot 6H_2O$ | -500 |

**Testing of Mortars**

Performance properties were tested using the following base cementitious tile adhesive formulation shown in Table 22 below.

**TABLE 22**

| Ingredient | Amount, wt% |
|---|---|
| Portland cement CEM I 52.5R | 35 |
| Fine silica sand F35 (50-350 microns) | 62.1 |
| Methylhydroxyethyl cellulose ether (MHEC) | 0.40 |
| Redispersible powder (RDP) from vinylacetate ethylene copolymer | 2.5 |

Example K - Setting Behavior and Strength Development in Mortar Pastes

The different effects of the calcium chloride salts in dry mortar formulations at low temperatures were determined with respect to setting time and strength development. Culminal™ C4053, commercially available from Ashland Inc. was used as MHEC. Results are shown in Table 23.

All ingredients and the measuring device were preconditioned to the desired temperature in a climate chamber. Preparation and measurement were conducted at the desired temperature in the climate chamber.

The cementitious tile adhesive samples were prepared by adding 26% of water to the dry powder formulation (including the base cementitious tile adhesive formulation set out in Table 20 above) and mixing it for 60 seconds. $CaCl_2$ salts were added to the dry powder formulations for Samples 1-3, and the wt%'s shown in Table 22 are based on the weights of the dry ingredients other than $CaCl_2$ salts. Setting time was determined using the same procedures described previously.

Preparation of the mortar and determination of tensile strength were accomplished in accordance with Standard Method DIN EN 1348 at the respective temperature. Flexural and compressive strength were determined in accordance with Standard Method DIN-EN 1015-11 at the respective temperature.

**TABLE 23**

| Sample | Temp. | $CaCl_2$ salt | Wt% | Active content Wt% | Setting time | Strength development (3 days) (N/mm$^2$) | | |
|---|---|---|---|---|---|---|---|---|
| | | | | | | Tensile | Flexural | Compressive |
| Ref-1 | 25°C | None | -- | -- | 760 | 1.1 | 3.2 | 6.0 |

(continued)

| Sample | Temp. | CaCl₂ salt | Wt% | Active content Wt% | Setting time | Strength development (3 days) (N/mm²) | | |
|---|---|---|---|---|---|---|---|---|
| | | | | | | Tensile | Flexural | Compressive |
| Ref-2 | 5°C | None | -- | -- | 2600 | 0.7 | 1.5 | 2.0 |
| Ref-3 | 1°C | None | -- | -- | 3200 | 0.5 | 0.8 | 1.7 |
| 1 | 1°C | Anhydrous CaCl₂ | 1 | 1 | 900 | 0.7 | 2.2 | 4.3 |
| 2 | 1°C | CaCl₂•2H₂O | 1.32 | 1 | 1200 | 0.7 | 1.8 | 3.9 |
| 3 | 1°C | CaCl₂•6H₂O | 1.96 | 1 | 1540 | 0.7 | 1.6 | 2.5 |

As can be seen in Table 23, the setting time for Samples 1 and 2 are significantly less than the setting times for the Reference samples at 1°C and 5°C which each contained 0% anhydrous calcium chloride, and are also much lower than the setting time for Sample 3, showing the benefit of using calcium chloride which is not completely hydrated, such as anhydrous calcium chloride and $CaCl_2 \cdot 2H_2O$ (and by inference $CaCl_2 \cdot H_2O$ and $CaCl_2 \cdot 4H_2O$), for decreased setting time. Similarly, the Flexural and Compressive strength values for Sample 1 exceeds the Flexural and Compressive strengths for the Reference sample at 1°C and 5°C, and that for Samples 2 and 3. Also, the tensile strength values for Samples 1 and 2 exceeds or are equal to the Tensile strength for the Reference sample at 1°C and 5°C, and that for Sample 3. In addition, the Flexural and Compressive strength values for Sample 2 ($CaCl_2 \cdot 2H_2O$) exceeds the Flexural and Compressive strengths for Sample 3 ($CaCl_2 \cdot 6H_2O$). Overall, these results show the benefit of using anhydrous $CaCl_2$ or $CaCl_2 \cdot 2H_2O$ (and by inference $CaCl_2 \cdot H_2O$ and $CaCl_2 \cdot 4H_2O$) with regard to Tensile, Flexural and Compressive strength of cementitious tile adhesives.

Example L- Water Uptake

Anhydrous calcium chloride shows a strongly hygroscopic and deliquescent behavior. When exposed to humid air, the salt will absorb water from the surrounding air and form a solution. Through the coating of the $CaCl_2$ surface with a non-hygroscopic material this effect can be strongly decreased. Table 24 shows the mass increase due to hydration following exposure of coated and uncoated anhydrous $CaCl_2$ salt to humid air (50% relative humidity, 23 °C) for a time period of 7 days. The coating on the coated anhydrous $CaCl_2$ salt was hydrogenated vegetable oil.

**TABLE 24**

| CaCl₂ Salt | Sample Weight | Active Content | Mass Increase (7 Days) |
|---|---|---|---|
| Anhydrous CaCl₂ | 1g | 1g | +1.5g |
| Coated anhydrous CaCl₂ | 2g | 1g | +0.4g |

Example M - Heat Evolution

Although the calcium chloride is coated and thus more stable in the dry mixture, during preparation of the paste slight shear forces are applied breaching the coating, and consequently the heat evolvement takes place instantaneously.
Performance properties were tested using the following base cementitious tile adhesive formulation shown in Table 25 below.

**TABLE 25**

| Ingredient | Amount, wt% |
|---|---|
| Portland cement CEM I 52.5R | 35 |
| Fine silica sand F35 (50-350 microns) | 64.6 |
| Culminal™ C4053 | 0.40 |

Heat evolution over time was measured with the help of a heat flow calorimeter working at 23°C. Sample holder, dry mix, water and spatula were placed in the device minimum two hours before measurement in order to be well tempered.

Tile cement paste was prepared through addition of water to tile adhesive formulation in an appropriate sample holder. Sample was homogenized with the help of a spatula for 20 seconds thereby applying shear forces. Without delay the sample was placed into the device and the heat evolvement over time was measured. As shown in Table 26 below, the Reference sample utilized the base cementitious tile adhesive formulation set out in Table 25 above; and Samples 4-8 included the same, but with the addition of anhydrous calcium chloride. Table 26 also shows the measured initial peak heat evolution which occurred in the samples instantaneously (within 2 minutes) after placing sample in device.

**TABLE 26**

| Sample No. | Coated Anhydrous $CaCl_2$ Added (% based on weight of other dry ingredients) | Sample Weight (g) | Initial Peak Heat Evolution (mW) | Initial Peak Heat Evolution (mW/g) |
|---|---|---|---|---|
| Ref. | none | 4 | 72 | 18 |
| 4 | 1% | 4.04 | 88 | 22 |
| 5 | 2% | 4.08 | 100 | 25 |
| 6 | 3% | 4.12 | 108 | 26 |
| 7 | 5% | 4.20 | 156 | 37 |
| 8 | 10% | 4.40 | 228 | 52 |

As can be seen in Table 26, the heat evolution in the presence of the anhydrous calcium chloride for Samples 4-8 exceeds the heat evolution measured in the Reference sample, showing the benefit of using calcium chloride which is not completely hydrated, such as anhydrous calcium chloride (and by inference $CaCl_2 \cdot H_2O$ and $CaCl_2 \cdot 2H_2O$ and $CaCl_2 \cdot 4H_2O$), for heat evolvement.

Example N - Setting Time and Strength Development

As shown in Table 27 below, the Reference samples utilized the base cementitious tile adhesive formulation set out in Table 25 above; and Sample 9 included the same, but with the addition of coated anhydrous calcium chloride. The samples were filled into the measurement device and the velocity of the ultra sonic wave was measured every 10 minutes. The test results are shown in Table 27.

**TABLE 27**

| Sample No. | Temp. | Coated anhydrous $CaCl_2$ Added (% based on weight of other dry ingredients) | Setting Time (min) | Strength development (3 days) ($N/mm^2$) | | |
|---|---|---|---|---|---|---|
| | | | | Tensile | Flexural | Compressive |
| Ref-1 | 25°C | 0% | 1000 | 0.9 | 2.8 | 6.2 |
| Ref-2 | 5°C | 0% | 2800 | 0.6 | 2.2 | 1.9 |
| Ref-3 | 1°C | 0% | 3600 | 0.4 | 1.6 | 1.8 |
| 9 | 1°C | 1.5% | 1700 | 0.7 | 2.3 | 4.4 |

As can be seen in Table 27, the setting time at 1°C in the presence of the anhydrous calcium chloride for Sample 9 is significantly less than the setting time for the Reference samples at 1°C and 5°C which contained 0% anhydrous calcium chloride, showing the benefit of using calcium chloride which is not completely hydrated, such as anhydrous calcium chloride (and by inference $CaCl_2 \cdot H_2O$ and $CaCl_2 \cdot 2H_2O$ and $CaCl_2 \cdot 4H_2O$), for setting time. Similarly, the Tensile, Flexural and Compressive strength values for Sample 9 each exceeds the various strengths for the Reference samples at 1°C and 5°C, showing the benefit of using calcium chloride which is not completely hydrated, such as anhydrous calcium chloride (and by inference $CaCl_2 \cdot H_2O$ and $CaCl_2 \cdot 2H_2O$ and $CaCl_2 \cdot 4H_2O$), for Tensile, Flexural and Compressive strength of cementitious tile adhesives.

Example O

Performance of the cellulose ethers in cementitious tile adhesive formulation (35.0% CEM I 52.5R; 0.4% CE; and 64.6% Silica sand (0.1 - 0.35 mm) was determined at low temperatures. As a benchmark, a commercially available Culminal ™ MHEC 15000PFS (Sample REF, available from Ashland Inc.) was compared to cellulose ether Samples B15 (no venting), described previously. All ingredients and the measuring device were preconditioned to 5°C in a climate chamber. Preparation and measurement were conducted at the desired temperature in the climate chamber according to the above mentioned procedures. Dry tensile strength was determined for the Samples in Table 28 after 7 days in the climate control environment at 5°C and 100% r.H.

**TABLE 28**

| Sample No. | Temperature | $CaCl_2$ | WF | Setting Time (1000 m/s)(h) | Tensile Strength 7 Day Dry, $N/mm^2$ |
|---|---|---|---|---|---|
| REF | 5°C | -- | 0.25 | 46.7 | 0.61 |
| REF | 5°C | +0.5% encapsulated $CaCl_2$ | 0.25 | 31.7 | 0.70 |
| B15 | 5°C | -- | 0.26 | 41.7 | 0.67 |
| B15 | 5°C | +0.5% encapsulated $CaCl_2$ | 0.26 | 28.3 | 0.85 |

At 5°C the setting times are strongly delayed due to the slower hydration reaction of cement at low temperatures as can be seen in Table 28. Nevertheless Sample B15 shows a significantly faster setting behavior than the REF sample. In the presence of 0.5% of encapsulated $CaCl_2$ the mortar hydration is accelerated and thus the setting times are shifted towards shorter setting times. The beneficial effect of a faster setting of mortars prepared with sample B15 is still significant in the presence of encapsulated $CaCl_2$.

**Claims**

1. A method comprising:

   a) mixing an alkaline solution comprising an alkali metal hydroxide with cellulose and an alkyl halogenide at a temperature of at least 10 °C to form a first reaction mixture comprising alkali cellulose, water and the alkyl halogenide;
   b) adjusting the temperature of the first reaction mixture to from 50 °C to 110 °C resulting in a reaction of a portion of the alkyl halogenide with the alkali cellulose forming a second reaction mixture comprising alkyl cellulose ether and unreacted alkyl halogenide, wherein
   the second reaction mixture is at a temperature in a range of from 50 °C to 110 °C;
   c) adding an alkylene oxide to the second reaction mixture from step b) to form a third reaction mixture;
   d) adjusting a temperature of the third reaction mixture to be in a range of from 80 °C to 110 °C and reacting at least a portion of the alkyl cellulose ether with:

      i) at least a portion of the alkylene oxide, and
      ii) at least a portion of the unreacted alkyl halogenide,

   thereby forming a fourth reaction mixture comprising

      - an alkyl hydroxyalkyl cellulose ether having a methyl D.S. value of from 1.40 to 2.10, and
      - a hydroxyethyl M.S. value of from 0.05 to 0.4; and

   e) recovering the alkyl hydroxyalkyl cellulose ether from the fourth reaction mixture.

2. The method of claim 1, wherein the alkali metal hydroxide is present in step a) in an amount of from 2.92 to 5.00 equivalents per anhydroglucose unit of the cellulose.

**3.** The method of claim 1, wherein the alkali metal hydroxide comprises sodium hydroxide.

**4.** The method of claim 1, wherein the alkyl halogenide comprises methyl chloride, the alkylene oxide comprises ethylene oxide, and the fourth reaction mixture comprises methyl hydroxyethyl cellulose ether.

**5.** The method of claim 1, wherein the first reaction mixture is raised to and held at a temperature between 70 °C to 110 °C for a period of time ranging from greater than 0 to 60 minutes in step b) resulting in the formation of the second reaction mixture.

**6.** The method of claim 5, wherein the second reaction mixture is adjusted to a temperature from 25 °C to 80 °C prior to the addition of the alkylene oxide in step c) resulting in the formation of the third reaction mixture.

**7.** The method of claim 1, wherein the first reaction mixture is raised to and held at a temperature from 50 °C to 70 °C for a period of time ranging from greater than 0 to 60 minutes in step b) resulting in the formation of the second reaction mixture.

**8.** The method of claim 1, wherein the first, second, third and fourth reaction mixtures each further comprise a diluent.

**9.** The method of claim 8, wherein the method is performed as a slurry process and the diluent comprises heptane.

**10.** The method of claim 8, wherein the method is performed as a high solids process and the diluent comprises dimethyl ether.


**Patentansprüche**

**1.** Eine Methode umfassend:

a) Mischen einer alkalischen Lösung, die ein Alkalimetallhydroxid umfasst, mit Cellulose und einem Alkylhalogenid bei einer Temperatur von mindestens 10 °C, um eine erste Reaktionsmischung zu bilden, die Alkalicellulose, Wasser und das Alkylhalogenid umfasst;
b) Einstellen der Temperatur des ersten Reaktionsmischung auf von 50 °C bis 110 °C, was zu einer Reaktion eines Teils des Alkylhalogenids mit der Alkalicellulose führt,
Bildung einer zweiten Reaktionsmischung, die Alkylcelluloseether und nicht umgesetztes Alkylhalogenid umfasst, wobei die zweite Reaktionsmischung bei einer Temperatur im Bereich von 50 °C bis 110 °C liegt;
c) Zugabe eines Alkylenoxids zu der zweiten Reaktionsmischung aus Schritt b), um eine dritte Reaktionsmischung zu bilden;
d) Einstellen einer Temperatur der dritten Reaktionsmischung, so dass sie in einem Bereich von 80 °C bis 110 °C liegt, und Umsetzen mindestens eines Teils des Alkylcelluloseethers mit:

i) mindestens einen Teil des Alkylenoxids, und
ii) mindestens einen Teil des nicht umgesetzten Alkylhalogenids, wodurch eine vierte Reaktionsmischung gebildet wird, die

- einen Alkylhydroxyalkylcelluloseether mit einem Methyl-D.S.-Wert von 1,40 bis 2,10, und
- einem Hydroxyethyl-M.S.-Wert von 0,05 bis 0,4 umfasst; und

e) Rückgewinnen des Alkylhydroxyalkylcelluloseethers aus der vierten Reaktionsmischung.

**2.** Verfahren nach Anspruch 1, wobei das Alkalimetallhydroxid in Schritt a) in einer Menge von 2,92 bis 5,00 Äquivalenten pro Anhydroglucoseeinheit der Cellulose vorhanden ist.

**3.** Verfahren nach Anspruch 1, wobei das Alkalimetallhydroxid Natriumhydroxid umfasst.

**4.** Verfahren nach Anspruch 1, wobei das Alkylhalogenid Methylchlorid umfasst, das Alkylenoxid Ethylenoxid umfasst und die vierte Reaktionsmischung Methylhydroxyethylcelluloseether umfasst.

**5.** Verfahren nach Anspruch 1, wobei das erste Reaktionsmischung auf eine Temperatur zwischen 70 °C und 110 °C angehoben und auf dieser Temperatur für eine Zeitdauer im Bereich von mehr als 0 bis 60 Minuten in Schritt b) gehalten wird, was zur Bildung der zweiten Reaktionsmischung führt.

6. Verfahren nach Anspruch 5, wobei die zweite Reaktionsmischung vor der Zugabe des Alkylenoxids in Schritt c) auf eine Temperatur von 25 °C bis 80 °C eingestellt wird, was zur Bildung der dritten Reaktionsmischung führt.

7. Verfahren nach Anspruch 1, wobei die erste Reaktionsmischung auf eine Temperatur von 50 °C bis 70 °C angehoben und auf dieser Temperatur für eine Zeitdauer im Bereich von mehr als 0 bis 60 Minuten in Schritt b) gehalten wird, was zur Bildung der zweiten Reaktionsmischung führt.

8. Verfahren nach Anspruch 1, wobei die erste, zweite, dritte und vierte Reaktionsmischung jeweils weiterhin ein Verdünnungsmittel umfassen.

9. Verfahren nach Anspruch 8, wobei das Verfahren als Slurry-Verfahren durchgeführt wird und das Verdünnungsmittel Heptan umfasst.

10. Verfahren nach Anspruch 8, wobei das Verfahren als ein Verfahren mit hohem Feststoffgehalt durchgeführt wird und das Verdünnungsmittel Dimethylether umfasst.

**Revendications**

1. Procédé comprenant :

a) le mélange d'une solution alcaline comprenant un hydroxyde de métal alcalin avec de la cellulose et un halogénure d'alkyle à une température d'au moins 10 °C
pour former un premier mélange réactionnel comprenant de la cellulose alcaline, de l'eau et l'halogénure d'alkyle ;
b) l'ajustement de la température du premier mélange réactionnel à 50 °C à 110 °C
ce qui résulte en une réaction d'une partie de l'halogénure d'alkyle avec la cellulose alcaline ce qui forme un deuxième mélange réactionnel comprenant de l'éther alkylique de cellulose et de l'halogénure d'alkyle n'ayant pas réagi,
le deuxième mélange réactionnel étant à une température dans une plage de 50 °C à 110 °C ;
c) l'ajout d'un oxyde d'alkylène au deuxième mélange réactionnel provenant de l'étape b) pour former un troisième mélange réactionnel ;
d) l'ajustement d'une température du troisième mélange réactionnel pour qu'elle soit dans une plage de 80 °C à 110 °C et la réaction d'au moins une partie de l'éther alkylique de cellulose avec :

i) au moins une partie de l'oxyde d'alkylène et
ii) au moins une partie de l'halogénure d'alkyle n'ayant pas réagi,

ce qui forme ainsi un quatrième mélange réactionnel comprenant

- un éther alkylique et hydroxylalkylique de cellulose ayant une valeur de D.S. par des groupes méthyle de 1,40 à 2,10 et
- une valeur de M.S. par des groupes hydroxyéthyle de 0,05 à 0,4 ; et

e) la récupération de l'éther alkylique et hydroxyalkylique de cellulose à partir du quatrième mélange réactionnel.

2. Procédé selon la revendication 1, dans lequel l'hydroxyde de métal alcalin est présent dans l'étape a) en une quantité de 2,92 à 5,00 équivalents par unité anhydroglucose de la cellulose.

3. Procédé selon la revendication 1, dans lequel l'hydroxyde de métal alcalin comprend de l'hydroxyde de sodium.

4. Procédé selon la revendication 1, dans lequel l'halogénure d'alkyle comprend du chlorure de méthyle, l'oxyde d'alkylène comprend de l'oxyde d'éthylène et le quatrième mélange réactionnel comprend de l'éther méthylique et hydroxyéthylique de cellulose.

**5.** Procédé selon la revendication 1, dans lequel le premier mélange réactionnel est monté à une température comprise entre 70 °C et 110 °C et maintenu à celle-ci pendant une durée allant de plus de 0 à 60 minutes dans l'étape b) ce qui résulte en la formation du deuxième mélange réactionnel.

**6.** Procédé selon la revendication 5, dans lequel le deuxième mélange réactionnel est ajusté à une température de 25 °C à 80 °C avant l'ajout de l'oxyde d'alkylène dans l'étape c) ce qui résulte en la formation du troisième mélange réactionnel.

**7.** Procédé selon la revendication 1, dans lequel le premier mélange réactionnel est monté à une température de 50 °C à 70 °C et maintenu à celle-ci pendant une durée allant de plus de 0 à 60 minutes dans l'étape b) ce qui résulte en la formation du deuxième mélange réactionnel.

**8.** Procédé selon la revendication 1, dans lequel les premier, deuxième, troisième et quatrième mélanges réactionnels comprennent en outre chacun un diluant.

**9.** Procédé selon la revendication 8, dans lequel le procédé est effectué sous forme d'une processus en suspension et le diluant comprend de l'heptane.

**10.** Procédé selon la revendication 8, dans lequel le procédé est effectué sous forme d'un processus à haute teneur en matières solides et le diluant comprend de l'éther de diméthyle.

FIG. 1

Enzyme Unsubstituted Weight Percent

FIG. 2

EP 3 074 425 B1

FIG. 3

EP 3 074 425 B1

**EP 3 074 425 B1**

**Patent documents cited in the description**

- US 61908449 B
- US 61917753 A